(19) **Europäisches Patentamt / European Patent Office / Office européen des brevets**

(11) **EP 2 797 424 B1**

(12) **EUROPEAN PATENT SPECIFICATION**

(45) Date of publication and mention of the grant of the patent:
**10.07.2019 Bulletin 2019/28**

(51) Int Cl.:
*A23D 9/02* (2006.01)    *C11B 1/10* (2006.01)
*C11B 3/02* (2006.01)    *C11B 1/06* (2006.01)
*C11B 3/12* (2006.01)    *C11C 1/08* (2006.01)

(21) Application number: **12861598.6**

(22) Date of filing: **18.12.2012**

(86) International application number:
**PCT/US2012/070387**

(87) International publication number:
**WO 2013/101559 (04.07.2013 Gazette 2013/27)**

(54) **DHA RETENTION DURING CANOLA PROCESSING**

DHA-RÜCKHALTUNG IN EINER RAPSVERARBEITUNG

RÉTENTION DE DHA PENDANT LE TRAITEMENT DU CANOLA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2011 US 201161582169 P**

(43) Date of publication of application:
**05.11.2014 Bulletin 2014/45**

(73) Proprietor: **Dow AgroSciences LLC
Indianapolis, IN 46268 (US)**

(72) Inventors:
• **WENSING, Steven
Indianapolis, Indiana 46217 (US)**
• **ADU-PEASAH, Swithin P.
Lexington, Kentucky 40513 (US)**

• **WALSH, Terence A.
Carmel, Indiana 46032 (US)**
• **PATTERSON, Thomas G.
Westfield, Indiana 46074 (US)**

(74) Representative: **f & e patent
Fleischer, Engels & Partner mbB, Patentanwälte
Braunsberger Feld 29
51429 Bergisch Gladbach (DE)**

(56) References cited:
**EP-A1- 1 354 518    WO-A1-2011/054801
WO-A1-2011/146524    JP-A- H03 244 344
US-A1- 2004 109 881    US-A1- 2005 014 237
US-A1- 2006 111 578    US-A1- 2007 218 183
US-B2- 6 649 781**

**Description**

PRIORITY CLAIM

This application claims the benefit of the filing date of United States Provisional Patent Application Serial Number 61/582,169, filed December 30, 2011, for "DHA RETENTION DURING CANOLA PROCESSING."

TECHNICAL FIELD

The present disclosure relates to vegetable-derived oils, and specifically to seed oils comprising docosahexaenoic acid. Some embodiments relate to the processing of canola oilseed comprising docosahexaenoic acid into a refined, bleached, and deodorized (RBD) oil that is well-suited for use in a food product.

BACKGROUND

Vegetable-derived oils have gradually replaced animal-derived oils and fats as the major source of dietary fat intake. While unsaturated fats (monounsaturated and polyunsaturated) are generally considered to be beneficial, saturated and trans fats are not. Saturated fat and trans fat raise undesirable LDL cholesterol levels in the blood. Therefore, it is advisable to choose foods low in saturated fat, trans fat, and cholesterol as part of a healthful diet. In an effort to promote healthier lifestyles, the United States Department of Agriculture has recently recommended that saturated fats make up less than 10% of daily caloric intake. However, saturated fat intake in most industrialized nations has remained at about 15% to 20% of total caloric consumption.

To facilitate consumer awareness, current labeling guidelines issued by the USDA require that total saturated fatty acid levels be less than 1.0 g per 14 g serving to receive the "low-sat" label and less than 0.5 g per 14 g serving to receive the "no-sat" label. This means that the saturated fatty acid content of plant oils needs to be less than 7% and 3.5% to receive the "low-sat" or "no-sat" label, respectively. Since issuance of these guidelines, there has been a surge in consumer demand for "low-sat" and "no-sat" oils. To date, this demand has been met principally with canola oil, and to a much lesser degree with sunflower and safflower oils. Canola oil has the lowest level of saturated fatty acids of all vegetable oils.

The characteristics of oils, whether of plant or animal origin, are determined predominately by the number of carbon and hydrogen atoms in the oil molecule, as well as the number and position of double bonds comprised in the fatty acid chain. Most oils derived from plants are composed of varying amounts of palmitic (16:0), stearic (18:0), oleic (18:1), linoleic (18:2) and linolenic (18:3) fatty acids. Conventionally, palmitic and stearic acids are designated as "saturated," because their carbon chains are saturated with hydrogen atoms, and hence have no double bonds; they contain the maximal number of hydrogen atoms possible. However, oleic, linoleic, and linolenic acids are 18-carbon fatty acid chains having one, two, and three double bonds, respectively, therein. Oleic acid is typically considered a monounsaturated fatty acid, whereas linoleic and linolenic are considered to be polyunsaturated fatty acids.

An unsaturated fatty acid of particular interest is docosahexaenoic acid (DHA) (C22:6). DHA is an omega-3 fatty acid that is a primary structural component of the human brain and retina. Dietary DHA may reduce the risk of heart disease by reducing the level of blood triglycerides in humans, and may also be useful in the treatment of colon and prostate cancers. Consumption of DHA is often recommended for pregnant or lactating mothers. Furthermore, low levels of DHA are associated with Alzheimer's disease. DHA can be manufactured in many animals from $\alpha$-linolenic acid (18:3), which is found in plants. However, only $\alpha$-linolenic acid (18:3) can be obtained from wild-type crops. While $\alpha$-linolenic acid has nutritional uses in its own right, it is not as bioavailable in humans as DHA, and it is not believed to confer the same health benefits as DHA.

Unsaturated lipids in oils may be oxidized into undesirable oxidation products that may impart undesirable odors and/or flavors to edible oils and fats, as well as products made therefrom. The rate of oxidation is affected by several factors, including the presence of oxygen, exposure to light and heat, and the presence of native or added antioxidants and pro-oxidants in the oil. Oxidation may occur as a result of repeated frying (induced oxidation), and/or storage for a prolonged period (auto-oxidation). Natural oils differ in their composition, and thus in their oxidation pathways. Because of the complexity of natural oils and the large number of possible reaction pathways for a given oxidation reaction, oxidation reactions are incompletely understood. However, some are known to proceed through a radical chain multi-step reaction cascade. Oxidative deterioration of oils is a common phenomenon, and limits the useful lifetime of the oil. In addition, oil obtained from oilseeds that have been stored for a substantial period of time after harvest is often higher in oxidation products than oil obtained from freshly-harvested oilseeds.

In the first step of lipid oxidation, double bonds react with oxygen to form allylic hydroperoxides (also known as peroxides). Because they originate from a first step of oxidation, hydroperoxides are considered to be primary oxidation products. They are routinely quantified by a standardized peroxide value test. Good quality oil, which is relatively bland in flavor and low in odor, will generally have a low Peroxide Value (PV). The PV of food oils delivered to food processors is often requested to fall below a specified value to ensure that the foodstuffs produced will be of high quality. Peroxides are unstable and readily undergo further reactions. A low PV is not the only marker for good oil quality, because the PV of an oil may reach a high level and then decline as peroxides are further broken down into secondary oxidation products.

Secondary oxidation products may be classified into three groups, according to the size of the resulting molecules. Although many high molecular weight unsaturated lipids have no distinctive flavor themselves, their breakdown compounds often have intense flavors, which adversely affect the quality and stability of oils. Some secondary oxidation products are of lower molecular weight than the original lipid and, thus, are more volatile than the starting lipid and peroxides. These secondary oxidation products (*e.g.,* aldehydes, carbonyls, ketones, alcohols, acids, esters, ethers, hydrocarbons, and lactones) are problematic in the edible oil industry. Gunstone (1999) "Reactions associated with double bonds," in Fatty Acid and Lipid Chemistry, Aspen Publishers, Gaithersburg, MD. Many of these secondary oxidation products can be tasted or smelled even at very low concentrations.

The susceptibility of individual fatty acids to oxidation is dependent on their degree of unsaturation. Thus, the rate of oxidation of linolenic acid, which possesses three carbon-carbon double bonds, is 25 times that of oleic acid, which has only one double bond, and it is two times that of linoleic acid, which has two double bonds. Therefore, of the naturally-occurring fatty acids in seed oil, linoleic and linolenic acids have the most impact on flavor and odor. Conversely, high oleic oil (≥70% oleic acid) is less susceptible to oxidation during storage, frying, and refining, and can be heated to a higher temperature without smoking, making it more suitable as cooking oil. Examples of commercially sold canola varieties having a fatty acid profile in seed oil of oleic acid above 70% (by weight) and linolenic acid below 3.5% (by weight) are the NEXERA® varieties, marketed by Dow AgroSciences LLC (Indianapolis, IN), which varieties produce "Omega-9 oil," a non-hydrogenated, high oleic acid, low linolenic acid oil. Omega-9 oil is currently used in numerous applications, including deep frying, sautéing, baking, spraying, and in salad dressings.

Traditional methods for processing canola grain for oil consist of mechanical pressing of the grain, and subsequent solvent extraction of oil from the pressed grain. Both mechanical- and solvent-extracted oils are combined to form crude oil. Crude oil is purified into a product for commercial use *via* removal of phospholipids (degumming); removal of free fatty acids (caustic refining); removal of pigment, metals, and oxidation products (bleaching); and removal of odoriferous compounds (deodorization). DHA contains six double bonds, and thus is very susceptible to oxidation. The high temperatures that are used during steps of conventional seed oil processing, such as deodorization, are adequate and even preferable for the processing of seed oils containing the fatty acid components naturally found in such oils. However, such conditions are not suitable for processing an oil comprising the very reactive and thermally unstable DHA molecule. DHA will decompose at high temperatures, and its presence in seed oils would present a problem with regard to edible oil production. Document WO 2011/054801 discloses a purified DHA-containing oil, having undergone a deodorization step at a temperature of below 200 °C.

DISCLOSURE OF THE INVENTION

Genetically-modified canola plants and seeds comprising a detectable amount of DHA (docosahexaenoic acid (C22:6, n-3)) have recently been produced. WO 2011/146524 A1. However, conventional methods of processing canola oilseed to produce a vegetable oil product are unsuitable for the processing of DHA-containing canola oilseed. Described herein are methods for processing plant (*e.g.,* canola) oilseed comprising a detectable amount of DHA. By the practice of a method according to the present invention as defined in claims 1 to 8, DHA from such an oilseed may be retained in a vegetable oil product produced therefrom. Methods according to some embodiments may be utilized to produce processed DHA-containing canola oil that meets traditional canola oil specifications. In examples, such processed DHA-containing canola oil comprises good sensory and organoleptic attributes, which may facilitate the marketing and use of this healthy oil.

In embodiments, a method for processing oilseed comprising a detectable amount of DHA may comprise one or more steps of conventional seed oil processing, including for example and without limitation: preparation, pre-processing, mechanical extraction, solvent extraction, degumming, neutralization/chemical refining, bleaching, deodorization, and storage. In some embodiments, crude oil is obtained from oilseed comprising a detectable amount of DHA by mechanical pressing, without the use of solvent extraction. In some embodiments, crude oil obtained by mechanical pressing is combined with oil obtained by solvent-extraction of press-cakes produced during mechanical pressing. Mechanically-pressed oil, due to lesser amounts phospholipids, has higher DHA concentration than solvent extracted oil. Thus, in particular embodiments, mechanical processing of crude oil separately (without combining it with the solvent-extracted oil) may require fewer steps and may allow the oil to be marketed as "virgin."

In particular embodiments, a relatively low temperature is employed during one or more steps of the oilseed processing. For example, a relatively low temperature may be used in some examples during deodorization. In certain examples, the use of such low temperatures ensures high DHA retention in the resulting oil without adversely impacting the quality or organoleptic attributes of the oil. Some embodiments include specific details regarding the handling of crude oil during refining. For example, the crude oil may be "handfed" during refining.

Also described herein are oils, food products, and commodity products comprising a DHA-containing vegetable oil that has been processed according to a method of the invention and has a color of less than 1 Red (on a scale of 0-20 Red) and less than 10 Yellow (on a scale of 0-70 Yellow).

The foregoing and other features will become more apparent from the following detailed description of several embodiments, which proceeds with reference to the accompanying figures.

BRIEF DESCRIPTION OF THE DRAWINGS

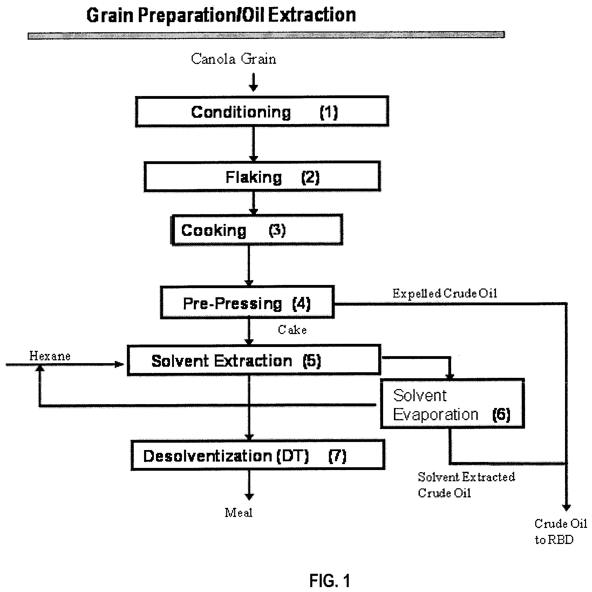

FIG. 1 includes an illustration of conventional canola seed processing steps that may be used to produce crude canola oil that is further refined to produce RBD canola oil. The illustrated conventional process comprises pre-processing (conditioning; flaking; and cooking), mechanical extraction (pre-pressing), and solvent extraction (solvent extraction; desolventization; solvent evaporation).

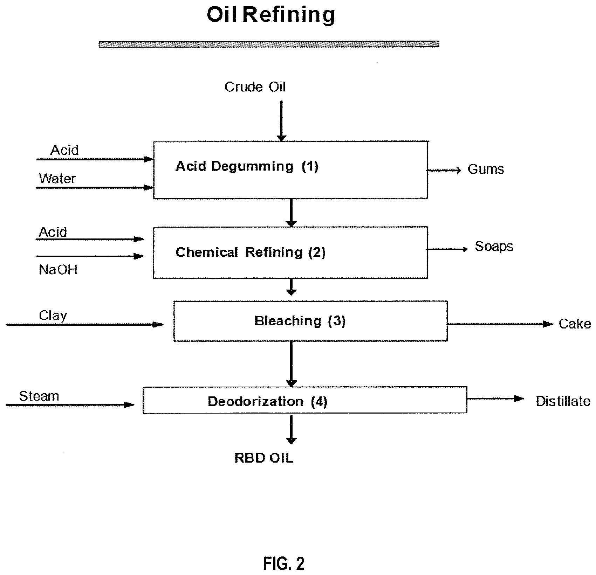

FIG. 2 includes an illustration of conventional oil processing steps which that may be used to further refine crude canola oil to produce RBD canola oil. The illustrated conventional process comprises degumming, chemical refining, bleaching, and deodorization. In particular embodiments of the invention, a deodorization step may be completed using unconventional low temperatures and holding conditions to allow DHA to be retained in the RBD oil refined by the process.

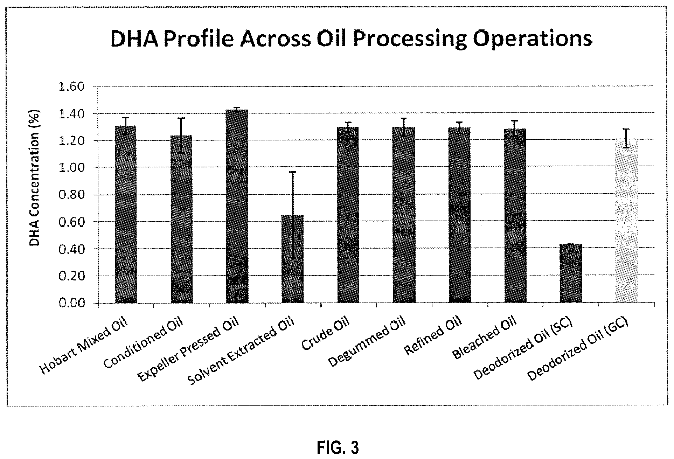

FIG. 3 includes a graphical illustration of the DHA retention observed across oilseed processing steps of canola oil enriched with DHA. Mechanically-extracted oil (about 1.3%) contains significantly higher levels of DHA than solvent-extracted oil (about 0.75%). A conventional deodorization step (including cooking at about 245°C for 2 hr) resulted in only 32% DHA retention. In contrast, an oilseed processing method with unconventional deodorization conditions (cooking at about 210°C for 60 minutes) resulted in about 97% DHA retention.

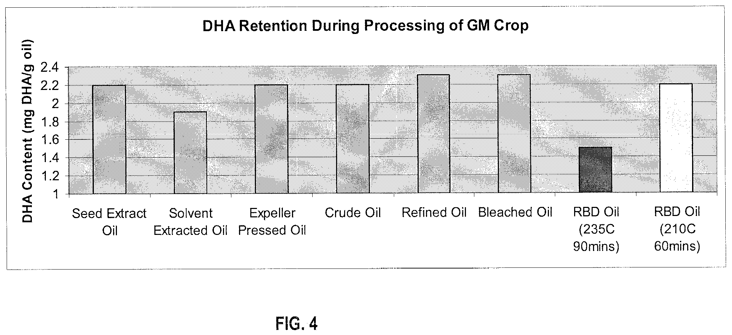

FIG. 4 includes a graphical illustration of the DHA retention observed across oilseed processing steps of canola oil from genetically-modified canola comprising DHA in its oilseed. *See* WO 2011/146524 A1. As observed in the DHA enrichment trials, crude and expeller-oil from genetically-modified canola contains more DHA than solvent-extracted oil. Further, incorporating an unconventional deodorization step into the conventional oil refining process greatly enhanced DHA retention.

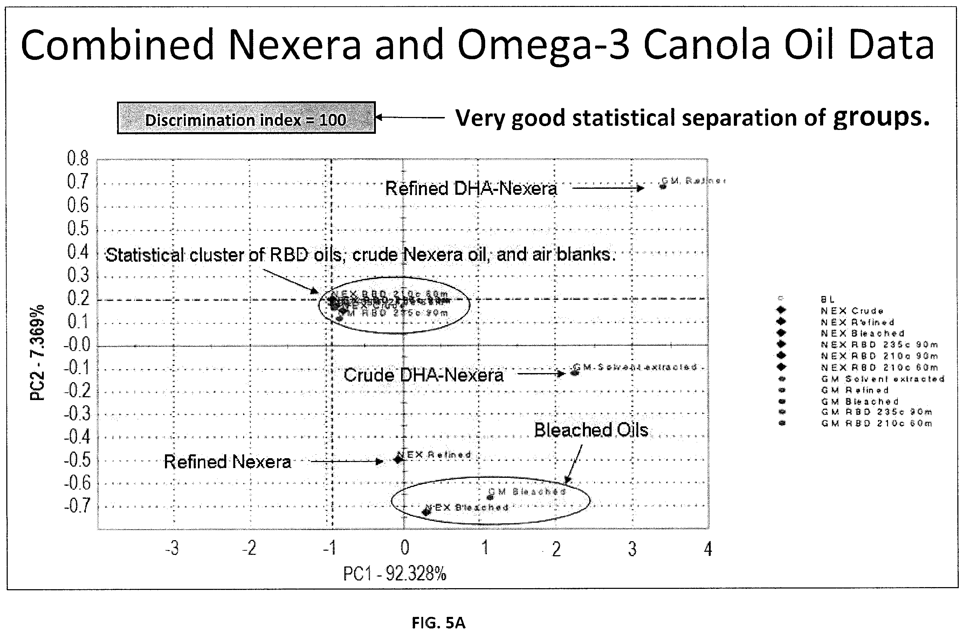

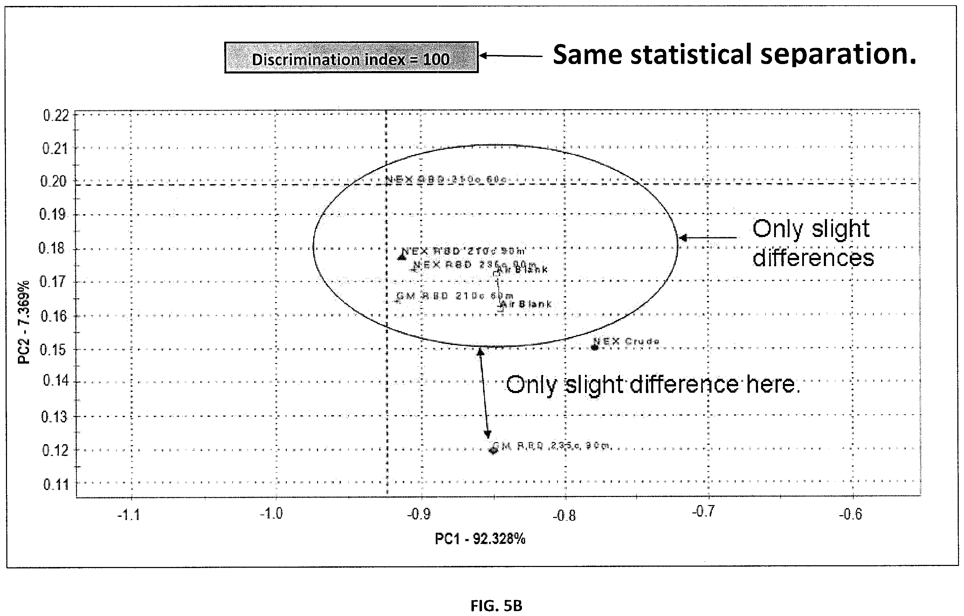

FIG. 5 includes an E-Nose comparison of NEXERA® canola and DHA-containing canola oil from genetically-modified canola (GM). FIG. 5 (top) includes a view showing the location of all the data on a scatter plot. FIG. 5 (bottom) includes an expanded view of the RBD cluster, showing the close similarity between RBD oil from NEXERA® and GM canola.

MODE(S) FOR CARRYING OUT THE INVENTION

*I. Overview of several embodiments*

Described herein is an improved method for processing an oilseed sample (*e.g.,* canola oilseed) or crude vegetable oil sample comprising docosahexaenoic acid (DHA) that may be used to produce an RBD oil product comprising DHA. While methods described herein are not necessary (and may be disadvantageous) for the production of RBD oil without DHA, the methods substantially avoid the decomposition and/or loss of DHA from an oilseed or crude oil sample comprising DHA that is used to produce RBD oil. Methods included in some embodiments of the invention provide a cost-effective oilseed purification process that can readily be commercialized for maximum retention of DHA in, *e.g.,* oil products produced from genetically-modified canola comprising a detectable amount of DHA. Processed oil (*e.g.,* canola oil) produced by methods described herein may meet traditional canola oil specifications, and may possess good sensory and organoleptic attributes to facilitate the marketing and/or use of DHA-containing oil products.

*II. Abbreviations*

DC dryer-cooler
DCP direct current plasma
DHA docosahexaenoic acid
DI deionized
DT desolventizer toaster

DTDC integrated desolventizer-toaster-dryer-cooler
GC gas chromatography
ICP inductively coupled plasma
NHP nonhydratable phosphatide
RBD refined, bleached, and deodorized
TOC total organic carbons

*III. Terms*

Canola: "Canola" refers to rapeseed (*Brassica* spp.) that has an erucic acid (C22:1) content of at most 2 percent by weight (compared to the total fatty acid content of a seed), and that produces (after crushing) an air-dried meal containing less than 30 micromoles ($\mu$mol) of glucosinolates per gram of defatted (oil-free) meal. These types of rapeseed are distinguished by their edibility in comparison to more traditional varieties of the species. Canola oil is considered to be a superior edible oil due to its low levels of saturated fatty acids.

Although rapeseed meal is relatively high in protein, its high fiber content decreases its digestibility and its value as an animal feed. Compared to soybean meal, regular canola meal contains higher values of dietary fiber. Because of its high dietary fiber, canola meal has about 20% less metabolizable energy (ME) than soybean meal. As a result, the value of the meal has remained low relative to other oilseed meals such as soybean meal, particularly in rations for pigs and poultry. Rakow (2004a) Canola meal quality improvement through the breeding of yellow-seeded varieties an historical perspective, AAFC Sustainable Production Systems Bulletin. Additionally, the presence of glucosinolates in some canola meals also decreases its value, due to the deleterious effects these compounds have on the growth and reproduction of livestock.

Canola varieties are distinguished in part by their seed coat color. Seed coat color is generally divided into two main classes: yellow and black (or dark brown). Varying shades of these colors, such as reddish brown and yellowish brown, are also observed. Canola varieties with lighter seed coat color have been widely observed to have thinner hulls, and thus less fiber and more oil and protein than varieties with dark color seed coats. Stringam et al. (1974) Chemical and morphological characteristics associated with seed coat color in rapeseed, in Proceedings of the 4th International Rapeseed Congress, Giessen, Germany, pp. 99-108; Bell and Shires (1982) Can. J. Animal Science 62:557-65; Shirzadegan and Röbbelen (1985) Götingen Fette Seifen Anstrichmittel 87:235-7; Simbaya et al. (1995) J. Agr. Food Chem. 43:2062-6; Rakow (2004b) Yellow-seeded *Brassica napus* canola for the Canadian canola Industry, AAFC Sustainable Production Systems Bulletin. This intuitively makes sense, as the canola plant may expend more energy into the production of proteins and oils if it does not require that energy for the production of seed coat fiber components. Yellow-seeded canola lines also have been reported to have low glucosinolate content. Rakow et al. (1999b) Proc. 10th Int. Rapeseed Congress, Canberra, Australia, Sep. 26-29, 1999, Poster #9. Thus, the development of yellow-seeded canola varieties has been pursued as a possibility to increase the feed value of canola meal. Bell (1995) Meal and by-product utilization in animal nutrition, in Brassica oilseeds, production and utilization. Eds. Kimber and McGregor, Cab International, Wallingford, Oxon, OX108DE, UK, pp. 301-37; Rakow (2004b), *supra;* Rakow & Raney (2003).

Yellow-seeded forms of *Brassica* species closely related to *B. napus* (*e.g., B. rapa* and *B. juncea*) have been shown to have lower levels of fiber in their seed and subsequent meal. The development of yellow-seeded *B. napus* germplasm has demonstrated that fiber can be reduced in *B. napus* through the integration of genes controlling seed pigmentation from related *Brassica* species. However, the integration of genes controlling seed pigmentation from related *Brassica* species into valuable oilseed *Brassica* varieties, such as canola varieties, is complicated by the fact that multiple recessive alleles are involved in the inheritance of yellow seed coats in presently available yellow-seeded lines. Moreover, "pod curling" is also a problem commonly encountered during integration of yellow seed coat color, due to poor chromosome pairing when yellow seed color is introgressed from other *Brassica* species, such as *juncea* and *carinata.*

Oil content: As used herein, "oil content" refers to a characterization of the oil in a plant or plant part (*e.g.,* a seed). In some embodiments, oil content is expressed as a percent of the whole dried seed. In some embodiments, a particular seed oil content and is characteristic of a particular plant variety, and may be used to distinguish a plant of that particular variety from other plants of the same species. Oil content may be measured through the use of various analytical techniques, such as, for example and without limitation: NMR, NIR, FAME analysis, and Soxhlet extraction.

In particular embodiments, a characteristic oil content may include a description of a "percent oleic acid," and/or a "percent linolenic acid." As used herein, a "percent oleic acid" refers to the percent of the total seed oil that is oleic acid as determined by FAME analysis. As used herein, a "percent linolenic acid" refers to the percent of the total seed oil that is linolenic acid as determined by FAME analysis.

FAME analysis may be used to measure the percent composition of a particular fatty acid in the total fatty acids in a sample. With regard to seed oil, the percentage may be determined by extracting a sample of oil from the seed, producing the methyl esters of fatty acids present in that oil sample, and analyzing the proportions of the various fatty acids in the sample using gas chromatography. The oil content thus determined may be a distinguishing characteristic of a variety.

Polyunsaturated fatty acid: As used herein, the term "polyunsaturated fatty acid" or "PUFA" refers to fatty acids with a carbon chain length of at least 16 carbons, at least 18 carbons, at least 20 carbons, or 22 or more carbons, with at least 3 or more double bonds, 4 or more double bonds, 5 or more double bonds, or 6 or more double bonds, wherein all double bonds are in the *cis* configuration.

Long-chain polyunsaturated fatty acids: As used herein, the term "long chain polyunsaturated fatty acid" or "LC-PUFA" refers to a fatty acid of 18 and more carbon chain length, 20 and more carbon chain length, containing 3 or more double bonds, or 22 or more carbons, with at least 3 or more double bonds, 4 or more double bonds, 5 or more double bonds, or 6 or more double bonds. LCPUFAs of the omega-6 series include, but are not limited to: gamma-linolenic acid (C18:3); di-homo-gamma-linolenic acid (C20:3n-6); arachidonic acid (C20:4n-6); adrenic acid (also called docosatetraenoic acid or DTA) (C22:4n-6); and docosapentaenoic acid (C22:5n-6). LC-PUFAs of the omega-3 series include, but are not limited to: alpha-linolenic acid (C18:3); eicosatrienoic acid (C20:3n-3); eicosatetraenoic acid (C20:4n-3); eicosapentaenoic acid (C20:5n-3); docosapentaenoic acid (C22:5n-3); and docosahexaenoic acid (C22:6n-3). LC-PUFAs also include fatty acids with greater than 22 carbons and 4 or more double bonds, for example and without limitation, C28:8(n-3).

Physical refining: As used herein, the term "physical refining" refers to a process where free fatty acids in a crude or degummed oil are removed by evaporation, rather than being neutralized and removed as soap in an alkaline refining process.

Saponification: As used herein, the term "saponification" refers to the hydrolysis of triglycerides, which are esters of fatty acids, by a base (*e.g.,* caustic soda NaOH) to form a carboxylate salt.

*IV. Oilseed processing*

Embodiments include a method for producing an refined oil (*e.g.,* RBD oil) comprising at least one PUFA. Particular embodiments comprise producing an oil comprising DHA and/or EPA. The method comprises recovering oil from a PUFA-producing genetically-modified plant (*e.g.,* canola), for example, by extracting (*e.g.,* pressing) and processing oil from a seed of the genetically-modified plant. Thus, particular embodiments comprise providing a genetically-modified plant, wherein the genetically-modified plant produces PUFAs of a type or in an amount not found in a wild-type plant of the same species. In some embodiments, a method of the invention may comprise refining oil from an oil sample that has been supplemented or enhanced by the addition of one or more PUFAs.

In some examples, a method for producing an oil comprising at least one PUFA may comprise obtaining a crude seed oil from a genetically-modified *Brassica* species plant that produces DHA and/or EPA. Such a crude seed oil may comprise, for example, a fatty acid content comprising oleic acid (C18:1) in an amount of about 70% or greater by weight, and/or comprising linolenic acid (C18:3) in an amount of about 4% or lower. Such oils for human consumption are generally considered to be healthy, and to have increased stability for foodservice and consumer packaged goods applications when compared to oils having a greater linolenic acid content. Such oils may also reduce the need for hydrogenation, and provide nutritional advantages relative to other oils comprised within food products. The oxidative stability of an oil comprising at least one PUFA, such as may be produced according to some embodiments of the present invention, may be increased by the addition of antioxidants and/or other additives known in the art.

In some embodiments, a genetically-modified plant from which an oil is recovered may comprise one or more PUFAs including, for example and without limitation, EPA (eicosapentaenoic acid (C20:5, n-3)), DHA (docosahexaenoic acid (C22:6, n-3)), DPA (docosapentaenoic acid (C22:5, n-6 or n-3)), ARA (eicosatetraenoic acid or arachidotlic acid (C20:4, n-6)), GLA (C18:3, n-6), ALA (C18:3, n-3), SDA (C18:4, n-3), and combinations of any of the foregoing. In some embodiments, a genetically-modified plant from which an oil is recovered may be a plant that has been genetically modified to recombinantly express a PUFA synthase system and a PPTase. In particular embodiments, such a plant may be genetically-modified so as to further express an accessory protein (*e.g.,* ACoAS, GPAT, LPAAT, DAGAT or ACCase) for the improvement of the production and/or accumulation of PUFAs (or other bioactive products of the PUFA synthase) by the genetically-modified plant. Examples of genetically-modified plants that may be useful in some embodiments of the present invention include the LC-PUFA-producing plants described in PCT International Patent Publication No. WO 2011/146524 A1.

In some embodiments, an oilseed from which an RBD oil product is to be processed may be produced by a higher plant, including both dicotyledonous and monocotyledonous plants. In embodiments, an oilseed is produced by a consumable plant, such as a crop plant used for its oil. In particular examples, an oilseed-producing plant may be, for example and without limitation: canola (*Brassica napus*); oilseed rape (*B. napus*); indian mustard (*B. juncea*); Ethiopian mustard (*B. carinata*); turnip (*B. rapa*); cabbage (*B. oleracea*); soybean (*Glycine max*); linseed/flax (*Linum usitatissimum*); maize (*Zea mays*); safflower (*Carthamus tinctorius*); sunflower (*Helianthus annuus*); tobacco (*Nicotiana tabacum*); *Arabidopsis thaliana,* Brazil nut (*Betholettia excelsa*); castor bean (*Ricinus communis*); coconut (*Cocus nucifera*); coriander (*Coriandrum sativum*); cotton (*Gossypium spp.*); groundnut (*Arachis hypogaea*); jojoba (*Simmondsia chinensis*); oil palm (*Elaeis gdineeis*); olive (*Olea eurpaea*); rice (*Oryza sativa*); squash (*Cucurbita maxima*); barley (*Hordeum vulgare*); wheat (*Triticum aestivum*); and duckweed (*Lemnaceae sp.*). Any and all genotypes and cultivars of an oilseed plant may be used in certain examples, the selection of which is within the discretion of the practitioner.

Embodiments of the invention include particular oil processing and/or refining methods that effectively retain PUFAs (*e.g.,* DHA and EPA) in an oil sample. Processed or refined oils may be obtained conventionally by any of several oil refining processes, including for example and without limitation: supercritical fluid extraction, pressing, solvent extraction, and combinations of the foregoing. Methods according to embodiments of the present invention refer to systems, processes, and process steps in these conventional methodologies that are known to those of skill in the art. For example, in oils obtained by solvent extraction, an oil/solvent mixture is referred to as "miscella," and the lipids remaining after removal of the solvent is referred to as "crude oil." Pressed or expressed oil is known as "press oil." As suggested, *supra,* oils may be processed by sequential application of the foregoing systems and methods. For example, canola oil may be obtained first by pressing canola oilseed to obtain expressed crude oil and press cake. The oil remaining in the press cake may subsequently be removed by solvent extraction with hexane, thereby producing miscella. After removing solvent from the miscella, solvent-extracted crude oil is obtained. The expressed crude oil and the solvent-extracted crude oil may then be combined to obtain unrefined canola oil.

Crude vegetable oils obtained from mechanical pressing and/or solvent extraction are a mixture of lipids including, for example and without limitation: triacylglycerols, phospholipids, sterols, tocopherols, and free fatty acids. Crude oils also comprise trace metals and other compounds. To produce an oil product for further use (*e.g.,* consumption), it is often necessary to further process/refine crude oil. Conventional oil processing methods, as well as processing methods according to some embodiments of the present invention, may comprise one or more processing steps including, for example and without limitation: preprocessing, mechanical pressing, solvent extraction, degumming, refining (neutralization), bleaching, and deodorization. Other steps that may optionally be included in an oil processing platform include dewaxing, hydrogenation, partial hydrogenation, esterification, interesterification, transesterification, fractionation, and hydrolysis.

Some oilseeds may be processed by sequential application of steps. For example, canola oil may be obtained first by pressing the oilseed to obtain expressed crude oil and press cake. The oil remaining in the press cake may then be removed by solvent extraction with hexane to produce miscella. After removing solvent from the miscella, solvent-extracted oil may be obtained. The expressed crude oil and the solvent-extracted oil may be combined to obtain unrefined canola oil. Steps in an oil processing platform may be executed independently or in an integrated or partially-integrated manner.

i. Preprocessing/preparation

In some embodiments, after oilseed has been collected from the plant, but before crude oil is extracted from the oilseed, the oilseed may be subjected to one or more preprocessing steps. While oilseed may comprise oils in an amount of between about 20% and about 50%, the oil in the intact seed is tightly bound within the cell, and the oil must either be forcefully removed or made more solvent-accessible to facilitate solvent extraction. Preprocessing may be performed so as to properly prepare oilseed for oil extraction, either by solvent or mechanical methods, and in some examples to remove hulls and/or other materials from the seed kernel or meat. Thus, particular examples may include one or more preprocessing steps such as, for example and without limitation: cleaning; separation of contaminant material; tempering; scaling; cracking (*e.g.,* utilizing corrugated rolls or grinders); conditioning/cooking; aspirating; drying; dehulling/decorticating; hot dehulling; flaking; and storage.

Cleaning methods vary greatly depending on the particular oilseed being used and the initial quality of the sample. For particular samples, it may be desirable, for example, to remove plant stems, sticks, leaves, and foreign material. Foreign material may decompose and cause heating in stored seed mass, thereby diminishing the oil quality. A cleaning method in some examples may comprise the use of a magnet designed to remove tramp metal, a scalper designed to remove large and heavy materials, and/or a sizing screener designed to remove fine and over-sized materials. Aspiration may also be employed in particular examples to remove lighter foreign materials. Cleaning processes comprising the use of a combination of rotating or vibrating coarse screens, reels, and aspiration are commonly referred to as "scalping," and these processes may be included in particular embodiments of the invention. Suppliers of cleaning and scalping equipment include Buhler (Plymouth, MN), Carter-Day (Fridley, MN), and Kice Metal Products (Wichita, KS).

To facilitate extraction of oil or other processing steps, it may be desirable to control the level of moisture in the oilseed prior to extraction. Thus, oilseed may be dried during preprocessing. Large, vertical, open-flame grain dryers may be used to dry oilseed. Exemplary grain dryers may comprise multiple columns of oilseeds that slowly migrate downward through the apparatus, wherein the upper portion of the column is used for drying, and wherein the lower section is used for cooling. It may also be desirable to raise the moisture in the seed to a particular level. For example, oilseed and water may be blended and allowed to equilibrate.

Flaking or cracking may be used to disrupt cell wall in the oilseed, thereby making the seed oil more accessible.

Flaking may be used to produce meat flakes of, for example, between about 0.25 and 0.37 mm (*e.g.,* 0.30 mm) thickness. Examples of equipment that may be used in some examples to flake or crack oilseed prior to extraction include, without limitation: a flaking mill; a cracking mill (available from, *e.g.,* Buhler, CPM Roskamp (Waterloo, IA)); a grinder (*e.g.,* a coffee grinder); and double roll flaking rolls (*e.g.,* smooth rolls available from Bauermeister Inc. (Memphis, TN). The settings of some flaking and/or cracking equipment may be adjusted, so as to produce a seed part of the desired thickness. In particular examples, an oilseed is cracked during preprocessing with a coffee grinder.

Oilseed may also be cooked or tempered during preprocessing, so as to denature proteins, release oil, and/or inactivate enzymes. For example, rapeseed contains the enzyme, myrosinase, which catalyzes the hydrolysis of glucosinolates to produce undesirable compounds, such as isothiocyanates and nitriles. Rapeseed may be cooked in multistage cookers to inactivate the myrosinase enzyme. For example, rapeseed may be preheated to 20-50°C in less than 5 minutes, and then contacted with live steam at 120°C. Cooking at high temperature is generally not necessary for sunflower seeds. Cracked and dehulled soybeans may be conditioned at a temperature of from about 65°C to about 90°C with a retention time of, *e.g.,* about 20-30 minutes, and adjusting the moisture with steam. Canola has greatly reduced levels of glucosinolates than that of conventional rapeseed, and thus canola may be cooked at a lower temperature to prevent isothiocyanate and nitrile formation (*e.g.,* less than 100°C). In particular examples, a cracked or flaked canola oilseed is cooked during preprocessing at a temperature of between about 75°C and about 95°C (*e.g.,* about 85°C) for between about 5 minutes and about 60 minutes (*e.g.,* about 20 minutes).

Cooking, conditioning, and tempering also may be used to provide oilseed with an elasticity that facilitates cell rupturing, to coalesce oil droplets, and to aggregate proteins, so as to improve flaking performance and extraction efficiency. Conditioning may be performed, for example, in rotating drums with an internal steam coil, or in a tray cooker. A mechanical sweep arm may be used to agitate the seed material and provide uniform heating.

After the oilseed has been prepared, crude oil may be extracted from the flakes or oilseed material. Ground or flaked oilseed may be extracted directly (*e.g.,* for grains with a lower oil content, such as soybean), or may be mechanically pressed prior to extraction (*e.g.,* for higher oil grains, such as canola and sunflower). Certain techniques known in the art may be used to enhance the oil extraction and/or physical refining of the prepared material, including for example and without limitation: inactivation of lipase enzymes in the prepared grain material; an ALCON™ process (Lurgi GmbH); and the use of an expander.

ii. Mechanical extraction

In embodiments, oilseed material may be mechanically pressed, so as to extract an oil sample from the oilseed material. Such mechanical oil extraction may comprise steps including, for example and without limitation: cooking; pressing; extrusion; settling; cake cooling; cake sizing; cake grinding; finishing; and oil filtration. In a conventional mechanical extraction procedure, the oilseed is subjected to extreme heat and pressure, which mechanically forces oil from the oil cell. In some examples of particular embodiments of the invention, a PUFA-containing oilseed may be mechanically pressed without extreme heating. Non-limiting examples of a mechanical press that may be used in particular examples include, without limitation: a screw press, such as is available from Anderson International Corp. (Cleveland, OH), and Simon-Rosedowns (Hull, UK); and a Täby Press Type-20A Press (Täby Skeppsta, Orebro, Sweden). Mechanical pressing may in some examples extract at least about 60% (*e.g.,* at least about 70%, at least about 80%, and at least about 90%) of the oil from an oilseed material (*e.g.,* flake or ground oilseed particle). Conversely, a press cake resulting from a mechanical extraction may comprise between about 15% and 19% residual oil.

In some examples, mechanical extraction may comprise introduction of cooked oilseed material into a mechanical press, where available oil (*e.g.,* about 60% or more of the total oil) is removed by the application of extreme mechanical pressure. Oil from a mechanical pressing operation typically contain a high concentration of meal fines, which may be removed in a screening tank followed by a pressure leaf or plate and frame filter, prior to delivering the crude oil to the refining process. In some examples, a filter aid (*e.g.,* in an amount of about 1%) may be added to the mechanically extracted oil, prior to filtration. In some examples, mechanically extracted oil is filtered using filter paper, *e.g.,* in a funnel positioned over a collection vessel or flask.

At the end of a mechanical extraction process, the resulting cake is typically compressed and quite hard, and extracted seed oil has been collected through drainage bars in the mechanical press. After the pressing operation, the press cake may be broken and cooled and subjected to solvent extraction for final oil removal.

iii. Solvent extraction

In some embodiments, an oilseed material (*e.g.,* a press cake produced by mechanical pressing) may be solvent-extracted to remove and obtain oil from the material. Generally to perform a solvent extraction, an oilseed material may be mixed with a solvent at a particular ratio of solvent to oilseed material (*e.g.,* between about 2:1 and about 3:1) and left in contact with the solvent for the duration of a particular residence time. The resulting crude solvent-extracted oil may then be collected and stored (*e.g.,* under nitrogen) until further processing. Solvent extraction may comprise steps/processes including, for example and without limitation: extraction; desolventizing/toasting; distillation; solvent separation; miscella refining; and liquid-phase recovery. Solvents that may be used to extract oil from oilseed material include, for example and without limitation: hexane, isopropyl alcohol, and supercritical $CO_2$.

The extractability of oil is enhanced with higher temperatures, and thus the practitioner generally desires to maintain temperatures as high as possible during a conventional solvent extraction procedure. Bailey's Industrial Oil & Fat Products, (2005) 6th edition, Vol. 5, chapter 5.1.5 ("solvent extraction"), John Wiley & Sons, Hoboken, NJ. In some examples of particular embodiments of the invention, a relatively low temperature may be used during solvent-extraction of oils from oilseed materials comprising at least one PUFA.

In some embodiments, solvent extraction comprises the utilization of an extractor (*e.g.,* a countercurrent flow extractor, a rotary extractor, and a deep-bed extractor). In general, as the material to be extracted enters the extractor, it is contacted with miscella at nearly full oil concentration. After this first wash, the miscella (which may contain, for example, between about 25% and about 30% oil), leave the extractor for solvent distillation and recovery. After passing through several washing stages, the extracted material (which may contain, for example, between about 25% and about 35% residual solvent) may then be subjected to desolventizing, such as may be carried out in a desolventizer toaster (DT) or evaporator. One non-limiting example of an extractor that may be utilized in particular examples is a Soxhlet™ extractor (Ace Glass, Vineland, NJ). A non-limiting example of an evaporator that may be utilized in particular examples for desolventization of an extracted material is a rotary evaporator, such as the Buchi Rotavapor RE111™ (Buchi, Switzerland).

Upon exiting an extractor, the miscella may be passed through a series of distillation equipment to separate the oil and recover the solvent. This process typically involves a series of falling film evaporators and stills. For example, a first effect evaporator, using steam and solvent vapors liberated from the DT, may concentrate the miscella from about 28% to about 80% or higher. The liberated vapors may be condensed and sent to the work tank for water-solvent separation. The miscella then may pass to a second-stage evaporator, typically operating at atmospheric or vacuum conditions, where the miscella concentration is increased up to, for example, between about 95% to about 98% oil. Finally, the miscella may enter an oil stripper or still, which removes most of the remaining volatiles while operating at a low pressure (*e.g.,* about 50 mm Hg abs. or less).

iv. Degumming

Vegetable oil processing, particularly the processing of vegetable oils high in phosphorous (*e.g.,* soybean, corn, and sunflower oils), typically includes the removal of phospholipids and lecithins (collectively "gums") by a process termed degumming. Degumming also removes other impurities from the crude oil sample, such as carbohydrates and proteins, and prepares the oil for chemical refining and physical refining. Degumming may comprise steps/processes including, for example and without limitation: acidification; filtration; blending; hydration; (centrifuge) separation; peroxide bleaching; and drying. As is known in the art, water degumming may be used to remove hydratable phosphatides that have a greater affinity for a water phase than an oil phase. However, special treatments are generally required to effectively remove nonhydratable phosphatides (NHPs).

In some examples, the technique of acid degumming is used to prepare an oil sample for chemical refining. Acid degumming may be carried out by adding a small amount of acid (*e.g.,* phosphoric acid) to a crude oil sample (as may be recovered from mechanical and/or solvent extraction), followed by adding a small amount of water (washing), and separating a water-rich gum phase that contains phospholipids. The result is a degummed oil.

In particular examples, specific acid treatment and other processes may be used to obtain a lower phosphorous degummed oil. Such processes, which are known to those of skill in the art, take advantage of the fact that calcium, magnesium, and iron salts of phosphatidic acid have a greater affinity for the oil phase than the water phase, and as such, must be removed from the oil by a special process. Pretreatment of oil with phosphoric acid, citric acid, or another agent with a proper temperature, time, and under appropriate agitation conditions, followed by a water washing step as described above, may be effective in removing phosphatide-containing components. Silica absorption processes may also be effective in precipitating these phosphatides in particular examples.

Many variations of acid degumming have been developed to improve the consistency of degummed oil obtained from the process. For example, one method developed for canola includes the introduction of a small amount of dilute caustic after acid pretreatment, and immediately before centrifugation. Further, dry degumming may be used as a pretreatment for physical refining of lower phosphatide oils as an alternative to water degumming. This dry process may be integrated into the bleaching operation, and it typically involves the introduction of acid, which is removed along with precipitated phosphatides during bleaching.

In some embodiments, a DHA- or EPA-containing oil sample (*e.g.,* as may be provided by pressure extraction) may be degummed by a process wherein the oil sample is mixed with water (*e.g.,* between about 0.5% to 2% water) and an aqueous acid solution comprising free oxalic acid and/or phosphoric acid (or suitable salts thereof) in amount based on the weight of the oil. In some examples, degumming may be carried out by a process comprising adding between about 0.1% and 0.3% phosphoric acid (*e.g.,* about 0.1% of 85% phosphoric acid), to an oil sample, based on the weight of the oil. In a conventional degumming process, the oil-water-acid mixture may then be stirred at a temperature between about 75°C and about 95°C for a retention time of between about 20 minutes and 1 hour, thereby degumming the oil sample. In some examples of particular embodiments of the present invention, a PUFA-containing oil sample may be heated to between about 40°C and about 70°C (*e.g.,* about 50°C), and about 2% water (at a temperature of between about 80°C and about 100°C) may be added. The oil-water mixture may then be stirred for between about 10 minutes and about 30 minutes (*e.g.,* about 20 minutes).

After phospholipids and lecithins have been separated into an aqueous phase by acid degumming, the oil-water mixture may be centrifuged to remove the gums and other impurities, and obtain a degummed oil. Adequate centrifugation produces a separation between an aqueous phase and an oil phase. The oil phase may be isolated from the aqueous phase, for example, by decanting or pipetting.

v. Refining/Neutralization

"Refining" refers to processes designed to neutralize free fatty acids present in an oil sample (*e.g.,* a degummed oil) by introduction of an alkali, and by centrifugal separation of heavy-phase insoluble material. Refining may also accomplish the removal of phospholipids, color bodies, and other impurities. Refining includes both physical and chemical operations. Generally, chemical refining may be carried out by adding a small amount of an alkali substance to degummed oil, and centrifuging the alkaline oil to remove a soapstock phase containing salts of saponified fatty acids (soaps) and obtain refined oil.

Refining may be conducted in an open batch system or in a continuous processing operation, and may be combined with degumming. Physical refining operations are generally incorporated with degumming, bleaching, and deodorizing operations in a single system (for example, an integrated steam refining system).

Some embodiments utilize a chemical caustic refining process. Caustic refining may comprise steps/processes including, for example and without limitation: heating; blending of caustic with crude or degummed oil; (centrifuge) separation; retention; addition of wash water; and drying. Caustic refining offers several advantages with respect to alternate physical methods. For example, if a degumming operation has been incomplete or ineffective, caustic refining will remove the bulk of the phosphatides. Likewise, if a high amount of metals (particularly calcium and/or magnesium) are present, these can be removed in the process. Caustic refining is also generally useful across different types of oilseed; *i.e.,* a system designed for one oil will generally produce satisfactory results with another oil.

In some examples, a caustic refining process may comprise injection of cooled crude degummed oil with an amount of pretreatment acid (*e.g.,* phosphoric acid) to facilitate removal of nonhydratable phosphatides. For example, in canola, acid may be introduced into the oil through a zone mixer immediately prior to caustic addition and a second zone mixer, which may reduce refining loss and improve oil color. The amount of any acid used is desirably minimized, as it must be neutralized with alkali. The amount of nonhydratable phosphorous in a given batch of crude oil may be measured with in-line DCP/ICP analysis equipment. Alternatively, the practitioner may assume a phosphorous level based on his or her experience, and provides an excess over the amount needed to remove the expected amount, so as to cover minor variations.

In some examples, a caustic refining process may comprise heating of a crude or degummed oil (for example, to between about 40°C and about 70°C (*e.g.,* about 60°C)). Then, a rationed amount of temperature-controlled dilute alkali solution (*e.g.,* caustic soda) may be added to the oil, where the rationed amount may be determined, for example, by measuring or approximating the free fatty acid levels in the oil. Preparation of the dilute alkali solution may be accomplished by preparing a batch of heavy caustic and softened water to a known specific gravity and temperature (*e.g.,* 16-24 B°). A neutralizing solution may also be prepared using a series of mass-flow equipment that measures the flow and density of a solution. This method may be desirable in systems wherein it may be integrated with ICP and computer control systems.

The amount of neutralizing solution to be used is based on the theoretical amount of alkali to neutralize the free fatty acids, plus an optional excess to remove other impurities. It is generally preferable to use the minimum amount of excess alkali necessary to remove the free fatty acids and other impurities, so as to minimize the saponification of neutral lipids. For example and without limitation, sodium hydroxide may be added to the degummed oil in an amount of between about 2% and about 20% excess (*e.g.,* about 12.5%), based on the weight of the oil. When determining the amount of neutralizing solution to be used, the practitioner should consider that pretreatment acid affects the free fatty acid titration test, and therefore the calculated excess should be adjusted for accordingly.

In some examples, after the oil is mixed with the rationed amount of temperature-controlled dilute alkali solution, the oil-alkali solution is agitated or stirred, for example, using an in-line high-shear mixer or static agitation device. Saponification of the free fatty acids is nearly instantaneous, but a retention time may be required for any excess caustic and water to hydrate phospholipids and react with color pigments. In certain examples, mixing with mechanical agitation may be provided during the retention period, but it may be desirable to monitor and/or control this agitation to avoid the creation of stable emulsions that will not separate in the centrifuge. An appropriate retention period generally depends upon the type and quality of oil being processed. For example, soybean oil may require 5 minutes or longer for the retention to be completed, while less retention is required for corn oil. Farr (1987) "Effects of Soybean Handling and Storage on Product Quality in Soybean Extraction and Oil Processing," presented at Food Protein Research & Development Center, Texas A&M University, p. 67-10.

In some examples, an oil-alkali solution may be heated (*e.g.,* to between about 75°C and about 80°C) to reduce viscosity and provide a more definite separation of soaps and oil. In typical conventional caustic refining processes, the oil-alkali solution is heated to between about 75°C and about 80°C. In some examples of particular embodiments of the invention, the oil-alkali solution is heated to between about 40°C and about 70°C (*e.g.,* about 65°C). It has been observed that the separation efficiency may suffer if the oil is not subjected to the high-temperature gradient provided by steam. Bailey's Industrial Oil & Fat Products, (2005), *supra,* chapter 5.1.7 ("caustic refining"). Thus, conventional caustic refining processes typically employ steam.

In some examples, the oil-alkali solution is centrifuged to separate the soaps from the oil after retention mixing (and after any heating). The oil may be isolated from the soaps after separation, for example, by decanting or pipetting.

In some examples, following centrifugation, the heavy-phase soapstock enters an acidulation system, or in some instances, is introduced back into the meal stream. The light-phase refined oil discharged from the centrifuge may be heated, mixed with hot water (*e.g.,* about 10-15%) to wash, and then mixed. To maximize the adsorption of soaps, it may be desirable for this oil-water mixture to be subjected to further retention mixing, again with sufficient but gentle agitation to avoid emulsification. Phosphoric acid may be added in the wash water to reduce the residual soap in the refined oil, and to provide a better split between the oil and aqueous phases.

In particular examples, the light-phase refined oil-water mixture may be subjected to a second (water wash) centrifugation. This second centrifugation may greatly reduce the residual soap (*e.g.,* by a factor of up to 10:1 or more), with the residual soap concentration remaining in the oil typically less than 50 parts per million. After this second water wash centrifugation, the oil may be sent to a vacuum dryer, where the residual moisture may be removed. Alternatively, the residual moisture may be carried over into a bleaching process, as residual moisture enhances the adsorption efficiency of certain bleaching agents. The oil is generally cooled after it is removed from the waterwash centrifuge, at which time nitrogen blanketing may be implemented. In alternative examples, the water wash step may be eliminated, and hydrated silica or other materials may be utilized to adsorb soaps and residual phosphorous during a subsequent bleaching process.

vi. Bleaching

Bleaching is an adsorptive cleaning process utilized during oil refining. While bleaching has been traditionally used for color reduction in edible oils, modern adsorptive bleaching techniques may be used to remove many undesirable compounds from oils and, thus, may be used to provide a litany of quality benefits. Thus, adsorbents and particular processes may be selected according to the discretion of the skilled practitioner to optimize the adsorption of a variety of impurities. For example, bleaching may be utilized to remove phospholipids remaining after degumming and neutralization. Phosphatides and residual soaps created during caustic refining may also be removed by a bleaching adsorption process. If they are not removed, such soaps may cause polymerization during deodorization. Oxidation products, both primary (peroxides) and secondary (anisidines), may also be removed during bleaching. Further, trace metals (*e.g.,* iron and copper) may be removed during bleaching. While citric acid chelation in the deodorizing process may reduce the catalytic oxidative potential of these metals, it may be desirable to remove them as early as possible in the process. According to the foregoing, an indicator of bleaching effectiveness may be one or more of color, residual soap content, phosphorous content, peroxide content, and anisidine content.

In some embodiments, a bleaching procedure may include, for example and without limitation: deaeration; acid pretreatment/conditioning; introduction of a bleaching agent (*e.g.,* a bleaching clay); silica treatment; a retention period with the bleaching agent (*e.g.,* for about 30 minutes); vacuum bleaching; and filtration/removal of clay and adsorbed materials. In particular examples, a bleaching procedure may include heating of the oil (*e.g.,* to a temperature between about 90°C and about 110°C, such as about 95°C) with a solid bleaching clay to remove impurities, including color bodies and residual soaps, and filtering to proved refined, bleached (RB) oil. Bleaching may be conducted in an open batch system or in a continuous processing operation.

Bleaching clays are typically derived from clay mineral deposits, and have been dried, milled, sieved, and possibly activated with acid. Bleaching clays are typically very fine powders, for example, wherein at least about 90% of the clay particles are less than about 80 $\mu$m in diameter, and/or wherein substantially all the clay particles are less than about 200 $\mu$m in diameter. One common type of bleaching clay that is amenable to acid activation is Bentonite, which includes aluminum silicates known as Montmorillonite. Several companies supply bleaching clays, including for example: Sud-Chemie Inc. (Munich, Germany), LaPorte Absorbents (Cheshire, UK), and Engelhard Corp. (Beachwood, OH). Non-limiting examples of a bleaching clay that may be used in certain examples include Sud Chemie's Tonsil 126FF and Englehard's Gr 160 bleaching clay.

In some embodiments, bleaching may comprise deaeration of an oil sample (*e.g.,* chemically refined oil). For example, an oil sample may be heated under a vacuum to deaerate the oil. In particular examples, the oil may be heated to a temperature of between about 40°C and about 70°C (*e.g.,* about 50°C) for deaeration. In some embodiments, oil may be pretreated with acid ("dry degumming") before bleaching. For example, a citric acid solution may be added (*e.g.,* 0.2% by weight 50% citric acid).

The major color pigments in edible oil are chlorophyll (green) and carotenoids (orange). Carotenoids are typically eliminated during deodorization (and/or hydrogenation), but chlorophyll is eliminated during bleaching. For the bleaching of high-chlorophyll seeds (*e.g.,* canola), a larger dose of bleaching clay is typically used, and it may be augmented by the addition of activated carbon or other agents. After a sufficient residence period, the oil may be dosed with clay and/or other bleaching agent(s) in a slurry tank. The agents may be introduced in a slip-stream of the oil, wherein the resulting slurry may be directed back to the main flow of oil, or may be introduced into a tank designed to hold the entire flow of oil (*e.g.,* under nitrogen) for several minutes. Alternatively, bleaching materials may be introduced directly into a bleaching vessel without preslurrying the oil in a separate slurry vessel. Further, a traditional retention bleacher may be replaced with an apparatus wherein retention time is provided for the clay-oil slurry through a series of pipes.

In some embodiments, a silica may be added to the oil to remove soaps and phospholipids before addition of bleaching clay. One non-limiting example of a silica that may be used in some examples is about 0.5% (by oil weight) Trysil™ (Grace Davidson, Columbia, MD). A silica may be continuously added to the oil in a slurry system at atmospheric conditions and with residual moisture from a water washing step. For dry degumming systems, water may be added with an amount of pretreatment acid to the oil to increase the moisture content. After reaction with the silica, the moisture may be removed under a vacuum (*e.g.,* about 1 mm Hg, about 5 mm Hg, about 10 mm Hg, and intermediate values) prior to addition of the bleaching clay, which may be preloaded on filters.

Other materials may also be introduced into the bleaching vessel or tank, such as activated carbon for canola, and/or other oils and filter aids. The oil may be agitated (*e.g.,* using steam agitation or mechanical agitation) in contact with the bleaching agents for the duration of a retention period, and then may be delivered to at least one bleaching filter(s) for removal of solid and adsorbed materials. In some examples of particular embodiments of the invention, the oil may be agitated in contact with the bleaching agent(s) at a temperature between about 90°C and about 110°C (*e.g.,* about 95°C) for between about 15 minutes and 1 hour (*e.g.,* about 30 minutes) under a vacuum.

After the retention period, a flash vessel may be used to drive off moisture in the oil. The bleached oil may be filtered to remove trace solids, and the oil may then be cooled and stored (*e.g.,* under nitrogen). An antioxidant may be added to the bleached oil in some examples to inhibit oxidation.

vii. Deodorization

In embodiments, RB oil produced by processing steps as set forth, *supra,* may be subjected to a deodorization step. Most raw vegetable oils comprise natural components that impart objectionable flavors and tastes to RB oil produced therefrom unless the components are removed. Such components include objectionable flavor bodies, as well as hydrogenation products that impart a negative flavor and color, both of which may be removed in a deodorizer. Deodorization also directly increases the shelf life and improves the color of the resulting oil product. Oil which has been subjected to refining, bleaching and deodorizing is referred to as refined, bleached and deodorized oil (RBD oil).

In some embodiments, a PUFA-containing oil sample may be deodorized by a process comprising, for example and without limitation: deaeration; heating; heating under a vacuum; injecting (or sparging) steam into the oil; cooling; flashing; filtration; distillate recovery; and acquisition of deodorized oil. There is a substantial difference between the vapor pressure of the oil and the volatile materials that affect the flavor, color, and stability of the oil, which allows these volatile materials to be selectively evaporated from the oil at low pressures (*e.g.,* between about 1 mm Hg and about 4 mm Hg). Any method to evaporate these volatile substances without damaging the oil may be used as a deodorization process in embodiments of the invention. Deodorization may be conducted in, for example and without limitation, a batch process, a continuous process, and a semi-continuous process.

In some examples, a deodorizing system may comprise deaerating RB oil (*e.g.,* at a temperature between about 60°C and about 90°C). Deaeration may be necessary prior to heating the oil, as most seed oils deposit polymers when oil containing oxygen is exposed to heating surfaces. In particular examples, after the oil passes through a deaerator, the oil may pass through an oil-oil interchanger. The oil may then be heated to the deodorizing temperature.

Deodorization generally comprises one or more conditions that force undesirable volatiles into the vapor state. For example, deodorization typically involves exposing a thin film of oil to a carrier gas at an elevated temperature and low pressure. A stripping gas (*e.g.,* steam) may be introduced to agitate the oil, thereby exposing all the oil in the RB oil sample to the surface conditions. The stripping gas then carries the volatiles from the deodorizer to a vapor recovery system. In particular embodiments, sparging of an oil sample may comprise initially heating the oil sample to a temperature of about 100°C under vacuum, and then sparging steam through the oil at a rate of, for example, about 1% (oil weight/hour).

The method according to claim 1 of the present invention avoids a particularly dramatic reduction of the PUFA content of deodorized oil that is attributable specifically to the extreme heat conditions conventionally employed for the vaporization of volatiles. In a conventional deodorization process, a carrier gas is introduced to the oil at an extremely high temperature (near the smoke point of the oil; *e.g.,* about 235-260°C), and the gas is introduced for a period of time of as much as several hours (*e.g.,* about 90 minutes). In the invention, a carrier gas may be introduced to an oil sample during deodorization at a temperature of, for example, about 202°C; about 204°C; about 206°C; about 208°C; about 210°C; about 212°C; about 214°C; about 216°C; and about 218°C. In some examples, the carrier gas is introduced at a temperature of about 210°C. In particular embodiments of the invention, a carrier gas may be introduced to an oil sample for a period of time that is, for example, about 20 minutes; about 25 minutes; about 30 minutes; about 35 minutes; about 40 minutes; about 45 minutes; about 50 minutes; about 55 minutes; about 60 minutes; about 70 minutes; about 75 minutes; about 80 minutes; and about 85 minutes. In some examples, the carrier gas is introduced for about 60 minutes.

After being brought to the deodorizing temperature, the oil is typically vigorously agitated in the deodorizing vessel for the designated period of time until the bulk of the volatiles are removed, and any heat bleaching is accomplished. The resulting oil is then cooled. While the oil is cooled, a small amount of a chelating agent (*e.g.,* citric acid) and/or one or more antioxidant(s) may be introduced into the oil. The volatiles removed during the deodorizing process are typically condensed and recovered in a vapor scrubber. The balance of the volatile gases, including the stripping steam and other more volatile compounds, are typically condensed in the vacuum system. Once the vacuum is broken, the RBD oil is typically stored under nitrogen or another inert gas.

Many conventional deodorization methods are known in the art. Examples of deodorization processes include, for example and without limitation, the deodorization techniques described by O. L. Brekke, "Deodorization," in Handbook of Soy Oil Processing and Utilization, Erickson, D. R. et al. eds. American Soybean Association and the American Oil Chemists' Society, pp. 155-191; and Bailey's Industrial Oil and Fat Products, 5th ed., Vol. 2 (pp. 537-540) and Vol. 4 (pp. 339-390), Hui, ed., John Wiley and Sons, Inc. Other deodorization processes include, without limitation, those described in U.S. Patents 6,172,248 and 6,511,690; and in U.S. Patent Publication No. 2005/0014237 A1.

*V. Products comprising a PUFA-containing vegetable oil*

Also disclosed is a food product, a supplement, a therapeutic product, or a nutraceutical product ("oil products") containing at least one PUPA (*e.g.,* DHA and/or EPA). Oil products of particular embodiments may be used in any application for which oils produced by methods according to embodiments of the present invention are suited. In general, oils produced by methods according to some embodiments may be used to replace, *e.g.,* mineral oils, esters, fatty acids, or animal fats in a variety of culinary and non-culinary applications, such as lubricants, lubricant additives, metal working fluids, hydraulic fluids and fire resistant hydraulic fluids. In particular embodiments, an oil product comprising at least one PUFA may be used in non-culinary or dietary processes and compositions. Oils produced by methods according to some embodiments may also and alternatively be used as materials in a process of producing modified oils. Examples of techniques for modifying oils include fractionation, hydrogenation, alteration of the oil's oleic acid or linolenic acid content, and other modification techniques known to those of skill in the art.

Non-limiting examples of non-culinary uses for which an oil product containing at least one PUFA include industrial, cosmetic, and medical applications, and any application wherein an oil containing at least one PUFA is substituted for a mineral oil, ester, fatty acid, or animal fat. Examples of cosmetic uses for an oil product containing at least one PUFA include use as an emollient in a cosmetic composition; as a petroleum jelly replacement; as comprising part of a soap, or as a material in a process for producing soap; as comprising part of an oral treatment solution; as comprising part of an ageing treatment composition; and as comprising part of a skin or hair aerosol foam preparation. Medical applications for an oil product containing at least one PUFA include, for example and without limitation, use in a protective barrier against infection. Furthermore, oils high in omega-9 fatty acids may be used to enhance transplant graft survival. U.S. Patent 6,210,700.

An oil product containing at least one PUFA may be selected from the group consisting of a food, a dietary supplement, a pharmaceutical formulation, a humanized animal milk, an infant formula, a nutraceutical, and a functional food. Suitable pharmaceutical formulations include, for example and without limitation: an anti-inflammatory formulation; a chemotherapeutic agent; an active excipient; an osteoporosis drug; an anti-depressant; an anti-convulsant; an anti-*Helicobacter pylori* drug; a drug for treatment of a neurodegenerative disease; a drug for treatment of a degenerative liver disease; an antibiotic; and a cholesterol lowering formulation. In some embodiments, an oil product containing at least one PUFA may be used to treat a condition selected from the group consisting of chronic inflammation, acute inflammation, gastrointestinal disorder, cancer, cachexia, cardiac restenosis, neurodegenerative disorder, degenerative disorder of the liver, blood lipid disorder, osteoporosis, osteoarthritis, autoimmune disease, preeclampsia, preterm birth, age-related maculopathy, pulmonary disorder, and peroxisomal disorder.

An oil product containing at least one PUFA may be a food product or functional food product. Suitable food products include, for example and without limitation: fine bakery wares; bread and rolls; breakfast cereals; processed and unprocessed cheese; condiments (*e.g.,* ketchup and mayonnaise); dairy products (*e.g.,* milk, yogurt, and ghee); puddings; gelatin desserts; carbonated drinks; teas; powdered beverage mixes; processed fish products; fruit-based drinks; chewing gum; hard confectionery; frozen dairy products; processed meat products; nut and nut-based spreads; pasta; processed poultry products; gravies and sauces; potato chips and other chips or crisps; chocolate and other confectionery; soups and soup mixes; soya based products (*e.g.,* milks, drinks, creams, and whiteners); vegetable oil-based spreads; and vegetable-based drinks.

An oil product containing at least one PUFA may be a feed or meal composition (or an additive for a feed or meal composition) for an animal. The term "animal" includes all animals, including human beings. Non-limiting examples of animals that may be provided with an oil product containing at least one PUFA are non-ruminants (*e.g.,* pigs, poultry, or fish) and ruminants (*e.g.,* cows, sheep and horses. The term "feed" or "feed composition" refers to any compound, preparation, mixture, or composition suitable for, or intended for intake by, an animal.

The following examples are provided to illustrate certain particular features and/or embodiments. The examples should not be construed to limit the disclosure to the particular features or embodiments exemplified.

EXAMPLES

Canola oils containing DHA were obtained by mechanical pressing and solvent extraction of genetically-modified canola that produce DHA, and by supplementing conventional canola oil with DHA. The oil that was mechanically-pressed from GM canola contained 0.28% DHA, and the solvent-extracted oil contained 0.21 % DHA. Both of these extracted oil fractions were combined to produce a crude GM canola oil comprising DHA. Both GM canola oil and supplemented canola oil with DHA were processed under a variety of conditions. Processes wherein DHA-containing oil was deodorized under reduced temperatures that would not be preferable for conventional oils (*e.g.,* between about 210-220°C for 60 min) produced oil with 024% DHA and desirable sensory and organoleptic characteristics. When processed using standard deodorization conditions (235-260°C for 90 min), the oil contained only 0.17% DHA.

Example 1: Materials and Methods

NEXERA® (Dow Agrosciences LLC, Indianapolis, IN) is a standard canola variety that does not produce DHA. NEXERA® oilseed was finely ground using a coffee grinder and mixed with Martek DHA-S Crude Oil (Martek, Columbia, MD). The canola seed was spiked with the Martek oil to a DHA target level of 1.2% w/w. The blended samples were mixed in a Hobart mixer overnight (Hobart, Troy, OH), and were processed using different oilseed processing methodologies. FIG. 1 and FIG. 2 provide flow charts of canola oilseed and crude oil processing steps. Each individual processing step is described in more detail below. Processing of DHA-blended canola oilseed was repeated three times for reproducibility using separate batches of NEXERA® canola seed.

Oilseed pressing. To extract oil from the canola seed, the seed was warmed to room temperature in the laboratory. Unlike the conventional canola oilseed processing step, the canola seed was ground in a coffee grinder instead of being flaked. The ground seed was then cooked by heating in an oven to 85°C ± 10°C for 20 minutes. After heat treatment, the ground seed was pressed using a Täby Press Type-20A Press (Täby Skeppsta, Orebro, Sweden). The expeller-pressed crude vegetable oil was slurried with 1% filter aid (based on the extracted oil weight) and filtered using an Erlenmeyer flask, a Buchner funnel, and Whatman #4 filter paper. The clarified expeller-pressed oil was then stored refrigerated or frozen, and later combined with solvent-extracted oil.

Solvent extraction. The presscake from the oilseed pressing step, obtained using the Täby Press, was solvent-extracted to remove and collect remaining residual oil. The presscake was placed into cellulose thimbles, which were in turn placed into a Soxhlet™ extractor (Ace Glass, Vineland, NJ). Hexane was used as the extraction solvent, and the Soxhlet™ extractor system was allowed to operate for 7-8 hours at about 70°C. The solvent-extracted presscake was removed from the cellulose thimbles, and air-desolventized prior to disposal. The extracted oil and hexane mixture (miscella) was rotary-evaporated to remove the hexane using a rotary evaporator (Buchi Rotavapor RE111™, Switzerland). This solvent-extracted oil was then combined with the expeller-pressed oil to produce crude canola oil.

Degumming. Phospholipids were removed from the crude canola oil through an acid degumming process. In this process, the crude oil was transferred into a glass reactor and heated to 50°C ± 5°C under gentle agitation. Thereafter, 0.1% (based on the oil weight) of 85% phosphoric acid was added to the crude oil, and the mixture was held at 50°C ± 5°C under gentle agitation for another 30 minutes. After the 30 minute hold, 2% (based on the oil weight) deionized water that was warmed to 50°C ± 5°C was added to the oil. The oil was held at 50°C ± 5°C under agitation for another 15-20 minutes. After the hold time, the oil was transferred to centrifuge bottles and centrifuged at 4,200 rpm for 10 minutes. The oil was recovered *via* decantation, and the phospholipids were discarded.

Chemical refining. After the canola oil was degummed, it was refined to remove free fatty acids. In this step, the degummed oil was placed into a glass reactor and heated to 60°C ± 5°C under gentle agitation. Thereafter, 12.5% caustic was added to the oil based on its free fatty acids content. The amount of caustic added was calculated using a formula from "Edible Oil & Fats Products: Processing Technology," in Bailey's Industrial Oil & Fats Products, 5th Edition, Volume 4, p. 316. The oil was heated and held at 65°C ± 5°C under gentle agitation for 15 minutes. After the hold time, the oil was transferred to centrifuge bottles and centrifuged at 4,200 rpm for 10 minutes. The oil was then decanted off for further processing, and the free fatty acids neutralized as soaps were discarded.

Bleaching. The refined canola oil was bleached to remove residual soaps, color bodies (chlorophyll), oxidation products (aldehydes and ketones), and trace metals. During the bleaching process, the refined oil was placed into a glass reactor and heated to 50°C ± 5°C under vacuum and gentle agitation for 15 minutes to deareate the oil. Thereafter, the vacuum was broken with nitrogen, and 0.2% (based on the oil weight) 50% citric acid was added to the oil. The oil was maintained at 50°C ± 5°C under gentle agitation for another 15 minutes. Then, 0.5% (based on the oil weight) Trysil™ (Grace Davidson, Columbia, MD) was added to the oil. The oil was heated and held at 60°C ± 5°C under gentle agitation for 30 minutes. Thereafter, 1-2% (based on the oil weight) of bleaching clay, Tonsil 126FF (Sud Chemie, Munich, Germany) was added to the oil, and the oil was then heated to 95°C ± 5°C under vacuum and under gentle agitation for another 30 minutes. After 30 minutes hold time, the oil was cooled to 50°C ± 5°C, the vacuum was broken with nitrogen, and the oil was filtered using an Erlenmeyer flask, a Buchner funnel and Whatmann #4 filter paper.

Deodorization. The RB oil was then deodorized to remove oxidation products and odiferous compounds. This was done by placing the oil into a glass vessel that can be heated to very high temperatures while under vacuum and that has the ability to sparge the oil with steam. The oil was placed into this vessel and heated to 100°C ± 5°C while under vacuum. When the oil reached 100°C ± 5°C, steam was sparged through the oil at a rate of 1% (weight of the oil /hour). Using as a control the conventional method for deodorization, the oil was heated to 235°C ± 5°C, and held at this temperature while being steam sparged for 90 minutes. Data acquired using other temperatures and holding times of deodorization are shown in Table 1. Lower temperatures and shorter sparging times were found to provide a surprising retention of DHA content. The maximum DHA retention was observed when the oil was heated to about 210°C ± 5°C, while being steam sparged for about 60 minutes. Other temperatures and holding times tested included: (1) heating to 245°C ± 5°C while sparging for about 120 minutes; (2) heating to 210°C ± 5°C while sparging for about 30 minutes; and (3) heating to 225°C ± 5°C while sparging for about 30 minutes. In all methods, the oil was subsequently cooled to about 100°C ± 5°C, at which point the steam sparging was stopped, and the vacuum was broken with nitrogen.

The following assays were used to determine how much DHA was retained using the improved method for processing canola oilseed, and to characterize the oil quality which was produced using the method.

FAME bulk oil analysis for DHA concentration. A FAME analysis was completed to quantitate the amounts of DHA from the oil samples. The oil samples were prepared for FAME analysis by mixing 20 mg of bulk oil to 1.0 mL heptanes in a 12x75 mm test tube. The tube was vortexed, and 250 µL of the diluted oil was aliquoted into a 2 mL crimp-top vial containing 750 µL heptanes and 40 µL 1% sodium methoxide in methanol. The vials were capped, vortexed gently for 10 seconds, and allowed to incubate at room temperature for 60 minutes before GC analysis.

Next, 1 µL of the sample was injected on an Agilent 6890 GC (Agilent Technologies, Santa Clara, CA) equipped with a flame ionization detector (FID). Methyl ester reference standards were purchased from Nu-Chek-Prep, Inc. (Elysian, MN), and used to identify the fatty acid peaks in each oil sample diluted to the same concentration as the samples. The column used was a DB-23 60-meter column with a 0.25-mm ID and 0.25-µm film thickness (Agilent Technologies). The oven temperature was set at 190°C, and maintained throughout the run. The inlet split ratio was 1:25, and the inlet temperature 280°C. Hydrogen carrier gas was set to a flow of 3.0 mL/min for 0.3 minutes, before it was ramped at 0.5 mL/min to 4.0 mL/min and held for 15.5 minutes, before it was dropped to 3.5 mL/min at a rate of 0.5 mL/min, and held for 5.0 minutes, to provide a total run time of 24 minutes. The detector temperature was set to 300°C with a constant carrier gas make up of 20 mL/min, fuel hydrogen flow of 30 mL/min, and oxidizer flow of 400 mL/min.

Empower™ software by Waters Corporation (Milford, MS) was used to calculate and report the percent areas and concentrations of each test sample. FAME peaks were identified by comparison to the retention times of the reference standard compounds. The relative fatty acid composition for each sample was calculated by dividing individual peak areas by the sum of all the FAME peak areas.

Moisture content. To analyze the canola seed for moisture content, a common coffee grinder purchased from a supermarket was used to grind oilseed prior to analysis. The parameters of a Denver Instrument IR-35 Moisture Analyzer (Bohemia, NY) were set for a drying temperature of 130°C, and an automatic analysis time of 25 minutes. The lid of the analyzer was opened, 6.00 ±0.05 grams of ground seed material was placed onto the weighing pan, and the ground seed material was analyzed according to the manufacturer's recommended protocol.

Oilseed content. A method for determining the oil content in oilseed or biomass by solvent extraction with Swedish tubes was performed. Initially, 3.00 ± 0.1 gm canola seed samples were weighed out. Three stainless steel balls and 30 mL of hexane were added to a Swedish tube (Carlson & Beauloye, San Diego, CA). The canola seed sample was transferred to the Swedish tube. A #2 neoprene stopper was used to tightly seal the Swedish tube. The Swedish tube was placed into an Eberach™ shaker model 6015 (Fisher Scientific, Hampton, NH), and shaken on high speed for 1.5 hours. A flat-bottom flask was weighed to the fourth decimal place, and the weight was recorded. A vacuum filtration apparatus consisting of a Buchner funnel (Fisher Scientific) and #113 or #114 Whatmann GF/C filter (Fisher Scientific) was placed on top of the Buchner flask. The pulverized oilseed material was placed into the filtration apparatus and filtered *via* a vacuum. The hexane was evaporated using a rotary evaporator, wherein the water bath temperature was not allowed to exceed 40°C. The flat-bottom flask containing the pulverized oil seed material was placed into a vacuum oven that was set to 35°C, and the flask was dried for at least 30 minutes. The flat-bottom flask containing the pulverized oil seed material was weighed to the fourth decimal place, and the oil content of the oil seed material was determined using *Eq. 1*.

$$(1) \quad \%oilcontent = \frac{(A-B) \times 100}{W},$$

where

A = weight of flask and crude oil/fat (grams)
B = weight of flask (grams)
W = weight of sample (grams)

Color analysis. The Lovibond™ PFX 880 (Wilkens-Anderson, Chicago, IL) was used to analyze and measure the color of the fats and oils from the canola seed. The color analysis was completed using the Lovibond™ formatted color analysis scale entitled "AOCS RY," and the path size for the analysis was set to 2.5 cms. To confirm that the spectrometer was operating correctly and taking correct measurements, a conformance filter was placed into the machine. Upon producing a reading of 0.3R +/- 0.2R and 1/1 Y +/- 0.2Y, the spectrometer was confirmed to be operating correctly. Samples of oil and fats were measured. Color readings of crude, degummed, and refined oil were acquired by placing the oil in a 2.5 cms glass cell. Color readings of bleached, winterized, and RBD oil were acquired by placing the oil in a 13.34 cms glass cell, and changing the path size to 13.34 cms. The resulting colors were determined for a range of 0-20 Red and 0-70 Yellow. Specifications for RBD canola oil are a maximum of 1 Red and 10 Yellow.

Free fatty acid determination. Free fatty acids were determined in oil samples using the Brinkmann 808 Titrando™ auto titration system (Brinkmann Corporation, Dallas, TX). The AOCS Official Method, Ca 5a-40, was modified to complete the analysis. Samples were weighed out to 7.05 + 0.05 g crude/degummed oil, 28.2 + 0.2 g refined/bleached/winterized oil, or 56.4 + 0.2 g deodorized oil, into a 250 mL beaker containing a small stir bar. The oil sample was uniformly mixed and completely liquidized; warming on a hot plate ensured that the mixing was thoroughly completed. Next, 75 mL neutralized ethyl alcohol was added to the crude/degummed/refined/bleached/winterized oil sample, while 50 mL neutralized ethyl alcohol was added to deodorized oil samples. The next step was to add 0.25N NaOH onto the 808 Titrando™ unit for crude/degummed oil, or 0.1N NaOH for refined/bleached/winterized/deodorized oil. The pH meter was washed with DI water. Then, the ethyl alcohol and oil mixture was placed onto the appropriate stir plate of the 808 Titrando™ unit. The buret tip and pH meter of the 808 Titrando™ unit were lowered into the solution. Free fatty acid titrations were determined using Tiamo™ software (Metrohm, Milwaukee, WI), and a stir rate setting of "12" was selected for uniform mixture of the oil without the production of layers. Free fatty acid content, reported as % oleic, % lauric, and % palmitic, was automatically calculated. The experiment was completed for each sample three times.

p-Anisidine value determination. The amount of aldehydes (secondary oxidation products) in seed oil was determined using a modified method from AOCS method Cd 18-90. An oil sample of 0.5 - 5.0 + 0.001 gm was measured. The oil sample was dissolved, diluted to 25 mL with isooctane, and then vortexed for uniformity. The absorbance of the isooctane/oil solution was measured using a spectrophotometer at $\lambda$ = 350 nm, and compared to a isooctane control solution. This absorbance was recorded as "Ab." A fresh solution of 0.25 g/ 100 mL p-anisidine in glacial acetic acid was prepared. 5 mL of the isooctane/oil mixture was placed into a test tube, and 1 mL of the p-anisidine solution was added. The test tube was capped, and the solution was shaken. After 10 minutes of incubation at room temperature, the absorbance of the isooctane-fat/anisidine solution was measured using a spectrophotometer at $\lambda$ = 350 nm, and compared to a isooctane/anisidine control solution. This absorbance was recorded as "As." The p-anisidine value was calculated using *Eq. 2*.

$$(2) \quad pAV = \frac{25 \times (1.2As - Ab)}{m},$$

where
m is the mass of the test portion in grams.

Peroxide value determination. The peroxide value of oils was determined using a modified protocol of the AOCS Method, Cd 8b-90. All substances were determined in terms of milliequivalents of peroxide per 1,000 gm sample that oxidize potassium iodide. Initially, the oil sample was weighed in a 250 mL beaker that contained a small stir bar. The beaker was placed on a stir plate, and 50 mL acetic acid-isooctane solution (3:2 v/v) was added to dissolve the sample. Next, 0.5 mL saturated potassium iodide solution was added to the sample. The sample was stirred for 1 minute, and then 30 mL DI water was added to the beaker. The sample was mixed vigorously until all reagents were completely mixed. Next, 0.5 mL 10% sodium dodecyl sulfate and 0.5 mL starch indicator solution were added to the beaker. The beaker was transferred to a titration stir plate, and the solution was titrated with 0.02N sodium thiosulfate using a Pt electrode. The electrode and buret tip were lowered into the solvent phase of the sample. The sample titration levels were determined using the Tiamo™ software (Metrohm, Milwaukee, WI). The procedure was done in triplicate to determine an average value, as well as the standard deviation and covariance values for the samples.

<u>Oil stability.</u> A subset of samples were analyzed on a Rancimat™ (Metrohm, Riverview, FL) at 110°C according to the manufacturer's suggested protocol. Three gram aliquots of each sample were placed into labeled reaction vessels, and an air inlet and cap were inserted into each vial. The collection vessels were filled with 70 mL Milli-Q water and placed onto the Rancimat™. Then, tubing was attached from the reaction vessel to the collection vessel. Once the set temperature of 110°C was reached, the vials were inserted into the heat block, and the Rancimat's™ airflow of 20 mL/min was initiated. The instrument monitored the increase in conductivity in the collection vessels, and determined the oxidative stability index (OSI) breakpoint of the oil from the inflection point of the conductivity curve. The OSI was then converted to the standard AOM value, as described in Anwar et al. (2003) J. Am. Oil Chem. Sci. 80(2):151-5.

<u>Tocopherol analysis.</u> Tocopherols are naturally occurring antioxidants found in vegetable oils. A high-throughput tocopherol analysis by UPLC was developed to quantitate the tocopherol levels present in the purified canola oils. The method to analyze tocopherol content utilized a Waters Acquity™ UPLC using a BEH Shield C18 2.1x150 mm, 1.7 μm particle size (Waters). The UPLC required an isocratic flow of 0.5 mL/min, using a solution of 99.5% of a 95% acetonitrile and 5% water solution, and 0.5% of a 70% IPA and 30% MeOH solution.

Example 2: DHA in Transgenic Canola Oilseed

Canola seed samples (either single seeds or bulked samples) were homogenized in heptane containing triheptadecanoin (Nu-Chek prep) as a triacylglycerol internal standard, using a steel ball mill. Prior to homogenization, a solution of 0.25 M freshly-prepared sodium methoxide (Sigma-Aldrich, St. Louis, MO) in methanol was added. Extraction was conducted at 40°C with constant shaking. Recoveries were verified by the recovery of the methylated surrogate C17 fatty acid. Extraction of FAMEs (fatty-acid methyl esters) was repeated three times, and the heptane layers were pooled prior to analysis. The completeness of the reaction was verified by checking for the presence of endogenous FAMEs in a fourth extraction/derivatization. The resulting FAMEs were analyzed by GC-FID using a capillary column BPX 70 from SGE (15 m x 0.25 mm x 0.25 pM). Each FAME was identified by retention time, and quantified by the injection of a rapeseed oil reference mix from Matreya LLC (Pleasant Gap, PA) as a calibration standard with addition of appropriate long chain polyunsaturated fatty acids (Nu-Chek Prep, Elysian MN).

FAME extracts corresponding to seeds from seven transgenic canola events containing genes for the PUFA synthase genes, SzACS-2 and HetI were found to contain peaks corresponding to DHA and DPA (n-6) following the GC-FAME analyses of $T_1$ seed (tabulated below in Table 1). Table 1 shows that the number of DHA-containing canola seeds varies (as expected from segregation of various copies of the transgene set inserted into the canola genome), as does the maximum content of DHA observed in the single seeds.

Table 1. LC-PUFA content of $T_1$ seed from seven transgenic canola events containing genes for the PUFA synthase genes, SzACS-2 and HetI.

| Event | PAT Copy # | Number DHA positive seeds[a] | Avg. DHA content[b] | Avg. DPA content | Avg. Total PUFA[C] | Avg. n-3/ PUFA[d] | Highest DHA content[e] |
|---|---|---|---|---|---|---|---|
| 5197[13]-010.001 | 1.3 | 75/96 | 0.36 | 0.15 | 0.51 | 70% | 0.81 |
| 5197[14]-032.002 | 1 | 67/96 | 0.43 | 0.12 | 0.55 | 78% | 1.05 |
| 5197[21]-052.001 | 4.3 | 5/24 | 0.02 | 0.01 | 0.03 | 81% | 0.05 |
| 5197[21]-053.001 | 4.6 | 32/48 | 0.07 | 0.03 | 0.11 | 64% | 0.22 |

(continued)

| Event | PAT Copy # | Number DHA positive seeds[a] | Avg. DHA content[b] | Avg. DPA content | Avg. Total PUFA[c] | Avg. n-3/ PUFA[d] | Highest DHA content[e] |
|---|---|---|---|---|---|---|---|
| 5217[6]-058.001 | 2.5 | 13/48 | 0.36 | 0.23 | 0.61 | 60% | 1.02 |
| 5217[6]-065.002 | 1.1 | 16/48 | 0.15 | 0.09 | 0.25 | 61% | 0.23 |
| 5222[1]-026.001 | 6.3 | 46/48 | 0.09 | 0.05 | 0.16 | 59% | 0.40 |

a. Number of seeds that contained detectable DHA/total number of seeds analyzed from the $T_1$ bulk.
b. Average DHA content (% of total lipids) of all the DHA-positive seeds.
c. Average PUFA content (% of total lipids) of all the DHA-positive seeds.
d. Average % ratio of DHAn-3/total LC-PUFA (DHA+DPAn-6).
e. Highest DHA content observed in a single seed.

$T_1$ seeds from Event 5197[14]-032.002 were planted in the greenhouse and leaf samples were taken from 96 plants at the 4-5 leaf stage for DNA analysis to determine the number of copies of the transgene in each $T_1$ segregant plant. This was performed by Hydrolysis probe assays of the *pat* gene, and identified three distinct classes of segregants; 21 homozygous, 45 heterozygous and 30 null plants. All of the homozygous and 31 null plants were grown to maturity in the greenhouse and the seed harvested. Average $T_2$ seed yields per plant from the homozygous and null plants were 7.36 gm and 8.61 gm respectively.

The long-chain polyunsaturated fatty acids (LC-PUFA) content of $T_2$ seeds from the greenhouse-grown $T_1$ plants of Event 5197[14]-032.002 were determined in bulk extractions of 8-12 seeds by GC-FAME analysis, as previously described. 21 null segregant plants were also grown to maturity as controls. No LC-PUFAs were detected in seeds from any of the null segregants. Twenty of the transgenic lines produced between 0.28% and 0.90% DHA in the bulk seed analyses. The DHA-containing seeds also contained between 0.09 and 0.34% DPA (n-6). The average proportion of DHA in total PUFA (DHA+DPA) was 77%.

The fatty acid composition of seed from four lines producing over 0.7% DHA is shown in Table 2 in comparison with that from four null segregant lines.

Table 2. Fatty acid composition of bulk $T_2$ seeds from four transgenic lines and four null segregants from Event 5197 [14]-032.002.

| Line ID | Zygosity | C14: 0 | C16: 0 | C16: 1 | C18: 0 | C18: 1 | C18: 2 | C18: 3 |
|---|---|---|---|---|---|---|---|---|
| 5197[14]-032.002.Sx002.012 | HOMO | 0.05 | 3.49 | 0.24 | 1.69 | 76.33 | 10.87 | 3.80 |
| 5197[14]-032.002.Sx002.093 | HOMO | 0.07 | 3.50 | 0.24 | 1.67 | 76.10 | 11.39 | 3.63 |
| 5197[14]-032.002.Sx002.050 | HOMO | 0.05 | 3.43 | 0.24 | 1.87 | 77.73 | 9.72 | 3.48 |
| 5197[14]-032.002.Sx002.010 | HOMO | 0.06 | 3.48 | 0.24 | 1.70 | 75.53 | 11.63 | 3.73 |
| 5197[14]-032.002.Sx002.011 | NULL | 0.06 | 3.59 | 0.23 | 1.68 | 76.56 | 12.08 | 3.24 |
| 5197[14]-032.002.Sx002.032 | NULL | 0.06 | 3.63 | 0.25 | 1.60 | 76.28 | 12.21 | 3.33 |
| 5197[14]-032.002.Sx002.037 | NULL | 0.05 | 3.74 | 0.25 | 1.61 | 77.46 | 10.78 | 3.35 |
| 5197[14]-032.002.Sx002.048 | NULL | 0.06 | 3.61 | 0.24 | 1.61 | 75.83 | 12.54 | 3.67 |

(continued)

| Line ID | Zygosity | C20: 0 | C20: 1 | C22: 0 | C22: 1 | C24: 0 | C22: 5 | C22: 6 |
|---|---|---|---|---|---|---|---|---|
| 5197[14]-032.002.Sx002.012 | HOMO | 0.67 | 1.25 | 0.39 | 0.02 | 0.18 | 0.28 | 0.74 |
| 5197[14]-032.002.Sx002.093 | HOMO | 0.60 | 1.21 | 0.33 | 0.02 | 0.16 | 0.32 | 0.77 |
| 5197[14]-032.002.Sx002.050 | HOMO | 0.70 | 1.18 | 0.39 | 0.02 | 0.19 | 0.20 | 0.80 |
| 5197[14]-032.002.Sx002.010 | HOMO | 0.62 | 1.22 | 0.36 | 0.02 | 0.16 | 0.34 | 0.90 |
| 5197[14]-032.002.Sx002.011 | NULL | 0.68 | 1.29 | 0.37 | 0.03 | 0.20 | 0.00 | 0.00 |
| 5197[14]-032.002.Sx002.032 | NULL | 0.67 | 1.31 | 0.40 | 0.03 | 0.23 | 0.00 | 0.00 |
| 5197[14]-032.002.Sx002.037 | NULL | 0.70 | 1.37 | 0.42 | 0.01 | 0.26 | 0.00 | 0.00 |
| 5197[14]-032.002.Sx002.048 | NULL | 0.64 | 1.24 | 0.35 | 0.01 | 0.19 | 0.00 | 0.00 |

The $T_2$ seed from ten homozygous lines of 5197[14]-032.002 that contained the highest levels of DHA were pooled to yield 60 gm of seed. Seed was also pooled from 10 null segregant lines to give 47 gm of seed for use as a negative control. The seed was planted at two locations in North Dakota in May 2009, with 8 plots of the transgene-containing seed, 6 plots of null segregant seed, and two plots of a commercial control (NEXERA® 845CL) at each location. All of the transgenic plant plots, and four of the null segregant plots, were covered with isolation cages during flowering. The remaining two null plots and the NEXERA® 845CL plots were left uncovered. The plots were swathed and harvested in September according to normal practices. At Site 1, a plot average of 0.95 kg of seed was obtained from transgenic plants, and 0.99 kg from the null plants. At Site 2, plot averages were 0.64 kg from transgenic plants, and 0.73 kg from nulls. GC-FAME lipid analysis of seed from each plot was performed to determine the levels of LC-PUFAs in the field-grown seed.

The average DHA content by 10-seed bulk analyses of the $T_3$ seed from the transgenic plants from Site 1 was 0.19%, and from Site 2 was 0.26%. The highest DHA content was 0.38% (with 0.03% EPA). The average % ratio of n-3 LC-PUFA/Total PUFAs was 73%.

Samples of each $T_2$ line used in the field trial were also grown in the greenhouse. The average DHA content by 10-seed bulk analyses of the $T_3$ greenhouse seed was 0.22%, with individual plants having up to 0.8% DHA. This correlates with the amount of DHA produced in the field.

These DHA-containing GM canola were used to produce oilseed comprising DHA for the development of an oil processing method that retains the DHA in refined oil products produced therefrom.

Example 3: Modified Oilseed Processing Results in Retention of DHA

FIG. 3 illustrates the percentage of DHA retention that resulted from the newly-developed methods for processing DHA-enriched canola oilseed. Table 3 lists the quality measurements of the processed oils obtained using different oilseed processing methods.

Table 3. Quality of canola RBD oils from enrichment trials.

| Quality | RBD Canola Lab Commercial | | Spiked RBD Canola | | | |
|---|---|---|---|---|---|---|
| | | | 245°C/2 hr | 210°C/30 min | 210°C/60 min | 225°C/30 min |
| Peroxides (meq/kg) | 0.0 | 0.0 | 0.0 | 0.0 | 0.0 | 0.0 |
| p-Anisidine | 1.69 | 1.20 | 2.00 | 1.23 | 0.69 | 0.67 |
| Free Fatty Acids (%) | 0.00 | 0.02 | 0.00 | 0.02 | 0.03 | 0.02 |

(continued)

| Quality | RBD Canola Lab Commercial | | Spiked RBD Canola | | | |
|---|---|---|---|---|---|---|
| | | | 245°C/2 hr | 210°C/30 min | 210°C/60 min | 225°C/30 min |
| Color (51/4" cell) | 0.3 R/1.9Y | 0.6R/3.9Y | 0.5R/2.9Y | 0.5R/6.8Y | 0.3R/3.6Y | 0.3R/2.8Y |
| DHA (%) | n/a | n/a | 0.43 | 1.26 | 1.16 | 0.96 |
| DHA Loss (%) | n/a | n/a | 68.0 | 4.0 | 3.0 | 21.0 |

Due to the limited quantity of Omega-3 canola grain, enrichment trials were performed initially to ascertain the impact of processing steps on oil quality. This was done by mixing ground NEXERA® canola seed with crude DHA-S oil obtained from Martek Biosciences. The blended material was processed through a conventional oilseed processing method. Oils generated from the enrichment studies were deodorized under different temperature and holding conditions. The increased DHA retention that resulted from the improved canola seed processing method from DHA-enriched canola oilseed was hypothesized to also result in increased DHA retention from transgenic canola grain that produces Omega-3 fatty acids.

As a result of this analysis, the DHA contents of the extracted oils were measured, and it was determined that crude expelled oil (~1.3% DHA) has significantly higher DHA content as compared to solvent extracted oil (~.75% DHA). In addition, significant DHA degradation occurred during the deodorization step under conventional processing conditions. Modification of this step resulted in the retention of greater concentrations of DHA. The standard conditions for the deodorization step of the traditional canola oilseed processing method resulted in a 32% DHA retention. In contrast, the conditions for the deodorization step of the newly-developed modified canola oilseed processing method surprisingly resulted in a 97% DHA retention. The high losses of DHA found using traditional canola oilseed processing methodology most likely stem from thermal degradation of the DHA molecules at extreme temperatures. The aforementioned results show that modification of deodorization conditions to involve lower temperatures, by itself, is able to significantly increase the amount of DHA retained in RBD oil.

Oilseed Processing Trials of Transgenic Canola Seed Containing DHA Biosynthetic Genes. Transgenic canola (Omega-3) described in Example 2 were grown in two separate fields. Harvested canola seed from the two fields were mixed at a 1:1 ratio. Crude oil was extracted from the canola seed, and the DHA content was measured using the gas chromatographic method as 0.26% of the total fatty acids of the oil. The grain was processed using the oilseed processing steps for canola as described above. The oil was deodorized under two sets of conditions: a conventional canola oilseed processing method (235°C for 90 min) and a modified canola oilseed processing method (210°C for 60 min). FIG. 4 shows that 96% of the DHA was retained in the oil deodorized under the modified canola oilseed processing conditions, whereas only 65% of the DHA was retained in the sample processed under conventional canola oilseed processing conditions.

Canola seed oil was extracted from NEXERA® canola and deodorized using both the standard and low-temperature conditions (protocols previously described). Quality measurements were made of the transgenic Omega-3 canola oil and compared to the enriched NEXERA® canola oil. Table 4 compares the quality measurements of the different oils. The Omega-3 oil isolated using the modified canola oilseed processing condition (210°C for 60 min) deodorization protocol produced oil with quality measurements that were comparable to the NEXERA® canola oil specifications.

Table 4. Oil Quality of NEXERA® and Omega-3 Canola Oil.

| Deodorization Conditions | NEXERA® Canola Oil | | Transgenic Omega-3 Canola Oil | | Traditional Oil Specifications |
|---|---|---|---|---|---|
| | 235C 90min | 210C 60min | 235C 90min | 210C 60min | |
| Peroxide Value (meq/ Kg sample) | 0.67±0.14 | 0.97±0.08 | 0.74±0.16 | 0.68±0.14 | 1 Max |
| P-Anisidine | 0.91±0.43 | 0.73±0.64 | 0.54±0.33 | 0.47±0.04 | No Spec |
| Free Fatty Acid (% oleic) | 0 | 0.018 | 0.02 | 0.025 | 0.05 Max |
| Moisture (ppm) | 26.2±3.8 | 11.4±0.2 | 24.2±2.8 | 10 | 500 Max |
| AOM (hrs) | 33.39 | 41.8 | 35.8 | 40.7 | 30 Min |

(continued)

| Deodorization Conditions | NEXERA® Canola Oil | | Transgenic Omega-3 Canola Oil | | Traditional Oil Specifications |
| --- | --- | --- | --- | --- | --- |
| | 235C 90min | 210C 60min | 235C 90min | 210C 60min | |
| Tocopherol (ppm) | 295.9 | 398.2 | 350 | 465.8 | No Spec |
| Color | 0.3R; 2.3Y | 0.4R; 3.3Y | 0.3R; 3.0Y | 0.4R; 6.4Y | 1.5R Max |

The Active Oxygen Method (AOM) of both oil samples were higher under the low temperature deodorization condition, suggesting higher stability. The higher stability can be attributed to the higher tocopherol content of the oil samples under milder deodorization conditions. The AOM for the Omega-3 canola oil was lower under all conditions than that of the NEXERA® canola oil. This underscores the chemical reactivity and instability of the DHA molecule.

Example 4: Modified Oilseed Processing Results in Normal Olfactory Characteristics

FIG. 5 and FIG. 6 show that the olfactory characteristics, as measured by the Electronic-Nose, of RBD Omega-3 canola oil were only slightly different than commercial RBD NEXERA® canola oil and an air blank. The Analytical Technologies Alpha MOS Fox 4000 system (Alpha MOS, Hanover, Md) is equipped with 18 metal oxide sensors, giving it a wide range of odor detection capability. Odors resulting from complex mixtures of hundreds, if not thousands, of compounds emitted by the test oil samples are detected by the Electronic Nose (E-Nose). The data produced from the E-Nose can be used to identify and discriminate off odors and irregular odors from shelf life stability studies.

The analytical conditions used to measure the samples are described in Table 5. To analyze the oils, a 5.0 mL heated syringe was used to inject 1.0 gm of the samples into the E-Nose. The incubator oven has 6 heated positions for 2, 10, or 20 mL vials with a heating range of 35-200°C in 1 degree increments. In addition, the incubator has an orbital shaker to mix the sample while heating. The system uses a TOC gas compressor to produce synthetic dry airflow for the system. A diagnostic sample set was run weekly to assure that the sensors were in working order, and an auto test was performed weekly to insure that the autosampler and temperatures in the chambers were functioning properly.

Table 5. Analytical conditions for Alpha MOS™ (Toulouse, FR) system.

| Headspace generation | |
| --- | --- |
| Quantity of sample in the vial: | 1.0 |
| Total volume of the vial: | 10 mL |
| Headspace generation time: | 30 min |
| Headspace generation temperature: | 100°C |
| Agitation speed: | 500 rpm |
| Headspace injection | |
| Carrier gas: | synthetic dry air |
| Injected volume: | 2.5 mL |
| Injection speed: | 2.5 mL/sec |
| Total volume of the syringe: | 5 mL |
| Syringe temperature: | 110°C |
| Acquisition parameters | |
| Acquisition time: | 120 sec |
| Acquisition delay: | 1080 sec |
| Flushing time: | 120 sec |
| Sensor chamber settings | |
| Sensors chamber 1: | LY2/LG, LY2/G, LY2/AA, LY2/GH, LY2/gCTL, LY2/gCT |

(continued)

| Sensor chamber settings | |
|---|---|
| Sensors chamber 2: | T30/1, P10/1, P10/2, P40/1, T70/2, PA/2 |
| Sensors chamber 3: | P30/1, P40/2, P30/2, T40/2, T40/1, TA/2 |

E-Nose analysis was completed on the following samples; NEXERA® canola oil containing no DHA, NEXERA® canola oil containing 0.5% DHA, NEXERA® canola oil containing 1.0% DHA, commodity canola oil containing no DHA, commodity canola oil containing 0.5% DHA, and commodity canola oil containing 1.0% DHA. Five to 10 grams of the sample were stored at 130 °F in a clear glass bottle. Aliquots of these samples were removed at time points of 60 days, 30 days, and an initial time point (*i.e.,* 0 day), and analyzed using the E-Nose.

The results indicate that the oils had very little detectable odor, and that the oils possessed good sensory and organoleptic attributes. FIG. 5 shows that the RBD Omega-3 canola oil produce similar E-Nose results as compared to the RBD NEXERA® canola oil. FIG. 6 is the enlarged Principal Component Analysis (PCA) map from FIG. 5. The enlarged map in FIG. 6 shows a slightly wider discrimination between the RBD Omega-3 canola oil that was processed at two different deodorization temperatures than is shown with the RBD NEXERA® canola oil that was processed at two different deodorization temperatures.

**Claims**

1. A method for processing a crude vegetable oil sample from a genetically-modified plant comprising docosahexaenoic acid (DHA), the method comprising: deodorizing the crude oil sample to produce a deodorized oil at a temperature selected from the group consisting of about 202°C; about 204°C; about 206°C; about 208°C; about 210°C; about 212°C; about 214°C; about 216°C; and about 218°C for less than 90 minutes, wherein more than about 95% of the amount of DHA in the crude oil sample is retained in the deodorized oil.

2. The method according to claim 1, wherein the crude oil sample is deodorized at a temperature of about 210°C.

3. The method according to claim 1, wherein the crude oil sample is deodorized for a period of time selected from the group consisting of about 20 minutes; about 25 minutes; about 30 minutes; about 35 minutes; about 40 minutes; about 45 minutes; about 50 minutes; about 55 minutes; about 60 minutes; about 70 minutes; about 75 minutes; about 80 minutes; and about 85 minutes, preferably for about 60 minutes.

4. The method according to claim 1, wherein the crude oil sample comprises mechanically-extracted oil from an oilseed.

5. The method according to claim 4, wherein the crude oil sample further comprises solvent-extracted oil from an oilseed.

6. The method according to claim 4, wherein the oil is mechanically-extracted from the oilseed by a process comprising mechanical pressing of ground oilseed.

7. The method according to claim 1, wherein the crude oil sample comprises oil from a *Brassica* sp., wherein the *Brassica* sp. preferably is canola, wherein more preferably the canola is a genetically-modified canola that synthesizes DHA in its tissue.

8. The method according to claim 1, wherein the method comprises:

   degumming the crude oil sample to remove phospholipids from the oil sample;
   neutralizing the crude oil sample to remove free fatty acids from the oil sample; and
   bleaching the crude oil sample to remove chlorophyll from the oil sample, wherein the method optionally further comprises extracting the crude oil sample from an oilseed.

**Patentansprüche**

1. Ein Verfahren zur Verarbeitung einer rohen Pflanzenölprobe aus einer gentechnisch veränderten Pflanze umfassend Docosahexaensäure (DHA), das Verfahren umfassend: Desodorieren der rohen Ölprobe bei einer Temperatur ausgewählt aus der Gruppe bestehend aus etwa 202 °C, etwa 204 °C, etwa 206 °C, etwa 208 °C, etwa 210 °C, etwa 212 °C, etwa 214 °C, etwa 216 °C und etwa 218 °C für weniger als 90 Minuten, um ein desodoriertes Öl herzustellen, wobei mehr als etwa 95 % der Menge an DHA in der Rohölprobe in dem desodorierten Öl erhalten bleibt.

2. Das Verfahren gemäß Anspruch 1, wobei die Rohölprobe bei einer Temperatur von etwa 210 °C desodoriert wird.

3. Das Verfahren gemäß Anspruch 1, wobei die Rohölprobe für einen Zeitraum ausgewählt aus der Gruppe bestehend aus etwa 20 Minuten, etwa 25 Minuten, etwa 30 Minuten, etwa 35 Minuten, etwa 40 Minuten, etwa 45 Minuten, etwa 50 Minuten, etwa 55 Minuten, etwa 60 Minuten, etwa 70 Minuten, etwa 75 Minuten, etwa 80 Minuten und etwa 85 Minuten desodoriert wird, vorzugsweise für etwa 60 Minuten.

4. Das Verfahren gemäß Anspruch 1, wobei die Rohölprobe mechanisch extrahiertes Öl aus einem Ölsamen umfasst.

5. Das Verfahren gemäß Anspruch 4, wobei die Rohölprobe des Weiteren mit Lösungsmittel extrahiertes Öl aus einem Ölsamen umfasst.

6. Das Verfahren gemäß Anspruch 4, wobei das Öl mechanisch aus dem Ölsamen durch ein Verfahren umfassend das mechanische Pressen gemahlenen Ölsamens extrahiert wird.

7. Das Verfahren gemäß Anspruch 1, wobei die Rohölprobe Öl aus einer *Brassica* sp. umfasst, wobei die *Brassica* sp. vorzugsweise Canola ist, wobei bevorzugter die Canola eine gentechnisch veränderte Canola ist, die DHA in ihrem Gewebe synthetisiert.

8. Das Verfahren gemäß Anspruch 1, wobei das Verfahren umfasst:

Entschleimen der Rohölprobe, um Phospholipide aus der Ölprobe zu entfernen;
Neutralisieren der Rohölprobe, um freie Fettsäuren aus der Ölprobe zu entfernen; und
Bleichen der Rohölprobe, um Chlorophyll aus der Ölprobe zu entfernen,
wobei das Verfahren wahlweise des Weiteren das Extrahieren der Rohölprobe aus einem Ölsamen umfasst.


**Revendications**

1. Procédé de traitement d'un échantillon d'huile végétale brute provenant d'un végétal génétiquement modifié et comprenant de l'acide docosahexaénoïque (DHA), lequel procédé comporte le fait de désodoriser l'échantillon d'huile brute, pour produire une huile désodorisée, à une température choisie dans l'ensemble formé par les suivantes : environ 202 °C, environ 204 °C, environ 206 °C, environ 208 °C, environ 210 °C, environ 212 °C, environ 214 °C, environ 216 °C, et environ 218 °C, durant moins de 90 minutes, étant entendu que plus d'environ 95 % de la quantité de DHA présente dans l'échantillon d'huile brute est retenue dans l'huile désodorisée.

2. Procédé conforme à la revendication 1, dans lequel l'échantillon d'huile brute est désodorisé à une température d'environ 210 °C.

3. Procédé conforme à la revendication 1, dans lequel on désodorise l'échantillon d'huile brute durant un laps de temps choisi dans l'ensemble formé par les suivants : environ 20 minutes, environ 25 minutes, environ 30 minutes, environ 35 minutes, environ 40 minutes, environ 45 minutes, environ 50 minutes, environ 55 minutes, environ 60 minutes, environ 70 minutes, environ 75 minutes, environ 80 minutes, et environ 85 minutes, et de préférence, durant environ 60 minutes.

4. Procédé conforme à la revendication 1, dans lequel l'échantillon d'huile brute comprend de l'huile extraite mécaniquement de graines oléagineuses.

5. Procédé conforme à la revendication 4, dans lequel l'échantillon d'huile brute comprend en outre de l'huile extraite par solvant de graines oléagineuses.

6. Procédé conforme à la revendication 4, pour lequel l'huile est extraite mécaniquement de graines oléagineuses selon un procédé comprenant le pressage mécanique de graines oléagineuses broyées.

7. Procédé conforme à la revendication 1, dans lequel l'échantillon d'huile brute comprend de l'huile d'un *Brassica* sp., lequel *Brassica* sp. est de préférence un canola, lequel canola, mieux encore, est un canola génétiquement modifié qui synthétise du DHA dans ses tissus.

8. Procédé conforme à la revendication 1, lequel procédé comporte les opérations suivantes :

   - dégommer l'échantillon d'huile brute pour éliminer les phospholipides de l'échantillon d'huile ;
   - neutraliser l'échantillon d'huile brute pour éliminer les acides gras libres de l'échantillon d'huile ;
   - et blanchir l'échantillon d'huile brute pour éliminer la chlorophylle de l'échantillon d'huile ;

   et lequel procédé comporte en outre, en option, le fait d'extraire l'échantillon d'huile brute de graines oléagineuses.

# Grain Preparation/Oil Extraction

Canola Grain

Conditioning     (1)

Flaking     (2)

Cooking     (3)

Pre-Pressing  (4) — Expelled Crude Oil

Cake

Hexane → Solvent Extraction  (5)

Solvent Evaporation     (6)

Desolventization (DT)     (7)

Solvent Extracted Crude Oil

Meal

Crude Oil to RBD

FIG. 1

# Oil Refining

**FIG. 2**

DHA Profile Across Oil Processing Operations

FIG. 3

EP 2 797 424 B1

FIG. 4

DHA Retention During Processing of GM Crop

DHA Content (mg DHA/g oil)

Seed Extract Oil, Solvent Extracted Oil, Expeller Pressed Oil, Crude Oil, Refined Oil, Bleached Oil, RBD Oil (235C 90mins), RBD Oil (210C 60mins)

FIG. 5A

FIG. 5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61582169 B
- WO 2011054801 A
- WO 2011146524 A1
- WO 2011146524A1 A
- US 6172248 B
- US 6511690 B
- US 20050014237 A1
- US 6210700 B

### Non-patent literature cited in the description

- Reactions associated with double bonds. **GUNSTONE.** Fatty Acid and Lipid Chemistry. Aspen Publishers, 1999
- **STRINGAM et al.** Chemical and morphological characteristics associated with seed coat color in rapeseed. *Proceedings of the 4th International Rapeseed Congress,* 1974, 99-108
- **BELL ; SHIRES.** *Can. J. Animal Science,* 1982, vol. 62, 557-65
- **SHIRZADEGAN ; RÖBBELEN.** *Götingen Fette Seifen Anstrichmittel,* 1985, vol. 87, 235-7
- **SIMBAYA et al.** *J. Agr. Food Chem.,* 1995, vol. 43, 2062-6
- **RAKOW et al.** *Proc. 10th Int. Rapeseed Congress,* 26 September 1999
- Meal and by-product utilization in animal nutrition. **BELL.** Brassica oilseeds, production and utilization. Cab International, 1995, 301-37
- Bailey's Industrial Oil & Fat Products. John Wiley & Sons, 2005, vol. 5
- Effects of Soybean Handling and Storage on Product Quality in Soybean Extraction and Oil Processing. **FARR.** Food Protein Research & Development Center. Texas A&M University, 1987, 67-10
- *Bailey's Industrial Oil & Fat Products,* 2005
- Deodorization. **O. L. BREKKE et al.** Handbook of Soy Oil Processing and Utilization. American Soybean Association and the American Oil Chemists' Society, 155-191
- Bailey's Industrial Oil and Fat Products. vol. 2, 537-540
- BAILEY'S INDUSTRIAL OIL AND FAT PRODUCTS. John Wiley and Sons, Inc, vol. 4, 339-390
- Edible Oil & Fats Products: Processing Technology. Bailey's Industrial Oil & Fats Products. vol. 4, 316
- **ANWAR et al.** *J. Am. Oil Chem. Sci.,* 2003, vol. 80 (2), 151-5